(19) Europäisches Patentamt
European Patent Office
Office européen des brevets

(11) **EP 3 540 827 B1**

(12) **EUROPEAN PATENT SPECIFICATION**

(45) Date of publication and mention
of the grant of the patent:
**30.08.2023 Bulletin 2023/35**

(21) Application number: **18192667.6**

(22) Date of filing: **05.09.2018**

(51) International Patent Classification (IPC):
*H01M 4/131* (2010.01)   *H01M 4/50* (2010.01)
*H01M 4/52* (2010.01)   *H01M 4/62* (2006.01)
*H01M 10/0525* (2010.01)

(52) Cooperative Patent Classification (CPC):
**H01M 4/131; H01M 4/50; H01M 4/52; H01M 4/622;**
H01M 10/0525; Y02E 60/10

(54) **ELECTRODE, SECONDARY BATTERY, BATTERY PACK, AND VEHICLE**

ELEKTRODE, SEKUNDÄRBATTERIE, BATTERIEPACK UND FAHRZEUG

ÉLECTRODE, BATTERIE SECONDAIRE, BLOC-BATTERIE ET VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.03.2018 JP 2018047152
31.08.2018 JP 2018162796**

(43) Date of publication of application:
**18.09.2019 Bulletin 2019/38**

(73) Proprietor: **Kabushiki Kaisha Toshiba
Tokyo 105-0023 (JP)**

(72) Inventors:
• **Sasakawa, Tetsuya**
**Tokyo, 105-0023 (JP)**
• **Harada, Yasuhiro**
**Tokyo, 105-0023 (JP)**
• **Takami, Norio**
**Tokyo, 105-0023 (JP)**

(74) Representative: **Hoffmann Eitle
Patent- und Rechtsanwälte PartmbB
Arabellastraße 30
81925 München (DE)**

(56) References cited:
**JP-A- 2011 054 463   US-A1- 2013 029 219**

**Description**

FIELD

The present disclosure relates generally to an electrode, a secondary battery, a battery pack, and a vehicle.

BACKGROUND

As nonaqueous electrolyte batteries using lithium ions are applied to automotive applications, such as micro hybrid vehicles or idling stop systems, or stationary applications, further increase in capacity, long life, and high output are expected. A lithium titanium composite oxide is excellent in cycle characteristics because a volume change accompanying a charge and a discharge is small. In addition, since the lithium insertion/extraction reaction of the lithium titanium composite oxide is, in principle, unlikely to precipitate lithium metal, performance deterioration is small even when a charge and a discharge with a large current is repeated.

When a nonaqueous electrolyte battery using lithium ions is mounted in an engine room of a vehicle such as an automobile, wirings connected to the nonaqueous electrolyte battery can be simplified and the space inside the vehicle can be expanded. However, since the engine room is in a high temperature environment of about 80°C, a side reaction between an electrode active material and an electrolytic solution of the nonaqueous electrolyte battery, swelling and deterioration of a binder or the like can occur. Therefore, there was a problem that the output of the nonaqueous electrolyte battery using lithium ions was lowered and the life thereof was shortened.

JP 2011 054463 A describes an electrolyte composition containing a co-polymer compound of quaternary ammonium molten salt containing an electrolyte salt, inorganic particulates, polyimide, and a co-polymerizing group.

The above problem is solved by the subject matter of the independent claims where advantageous embodiments are described in the dependent claims. Examples and technical descriptions of apparatuses, products and/or methods in the description and/or drawings which are not covered by the claims are presented not as embodiments of the invention but as background art or examples useful for understanding the invention.

BRIEF DESCRIPTION OF THE DRAWINGS

FIG. 1 is a cross-sectional view schematically showing an example of a secondary battery according to a second approach;

FIG. 2 is an enlarged cross-sectional view showing part A of the secondary battery shown in FIG. 1;

FIG. 3 is a partially notched perspective view schematically showing another example of the secondary battery according to the second approach;

FIG. 4 is an enlarged cross-sectional view showing part B of the secondary battery shown in FIG. 3;

FIG. 5 is a perspective view schematically showing an example of a battery module according to the second approach;

FIG. 6 is an exploded perspective view schematically showing an example of a battery pack according to a third approach;

FIG. 7 is a block diagram showing an example of an electric circuit of the battery pack shown in FIG. 6;

FIG. 8 is a cross-sectional view schematically showing an example of a vehicle according to a fourth approach;

FIG. 9 is a diagram schematically showing another example of the vehicle according to the fourth approach; and

FIG. 10 is a diagram showing pore size distributions according to Examples and Comparative Examples.

DETAILED DESCRIPTION

According to a first approach, an electrode is provided. The electrode includes a binder, and an active material represented by a general formula $Li_xM_yO_2$, where $0 \leq x \leq 1.33$ and $0.5 \leq y \leq 1$ are satisfied and M contains at least one element selected from the group consisting of Ni, Co, and Mn. The binder includes a polymer that contains a monomer containing a nitrogen atom, the monomer comprising at least one of acrylonitrile and imide compounds. In the pore size distribution of the electrode according to mercury porosimetry, the following formula (1) is satisfied when the pore median diameter is represented by D [um] and the pore specific surface area is represented by S [$m^2/g$]:

$$S/D \geq 35 \ \ldots \ (1).$$

According to a second approach, a secondary battery is provided. The secondary battery includes the electrode according to the first approach.

According to a third approach, a battery pack is provided. The battery pack includes the secondary battery according to the second approach.

According to a fourth approach, a vehicle is provided. The vehicle includes the battery pack according to the third approach.

According to at least one of the approaches described above, it is possible to provide an electrode having high output and excellent high temperature durability.

Approaches are explained below, referring to drawings. The same number is applied to common structures throughout the following approaches, and overlapped explanations are omitted. In addition, each drawing is a schematic view for encouraging explanations of the approach and understanding thereof, and thus there are some details in which a shape, a size and a ratio are different from those in a device actually used, but they can be appropriately design-changed considering the following explanations and known technology.

(First Approach)

According to a first approach, an electrode is provided. The electrode includes a binder, and an active material represented by a general formula $Li_xM_yO_2$, where $0 \leq x \leq 1.33$ and $0.5 \leq y \leq 1$ are satisfied and M contains at least one element selected from the group consisting of Ni, Co, and Mn. The binder includes a polymer that contains a monomer containing a nitrogen atom, the monomer comprising at least one of acrylonitrile and imide compounds. In the pore size distribution of the electrode according to mercury porosimetry, the following formula (1) is satisfied when the pore median diameter is represented by D [um] and the pore specific surface area is represented by S [$m^2$/g]:

$$S/D \geq 35 \ ... \ (1).$$

Conventionally, for example, a carbonate-based organic solvent is used as an electrolyte of a lithium ion nonaqueous electrolyte battery. Since the electrode is exposed to an electrolyte containing such an organic solvent, it is desirable that the binder contained in the electrode is not easily swelled with respect to the electrolyte. When the binder swells, the output characteristics are deteriorated and the cycle life characteristics are deteriorated as well. For example, polyvinylidene fluoride (PVdF) used as the binder tends to swell when exposed to the carbonate-based electrolyte. In particular, the binder is more likely to swell under a high temperature environment of 80°C or higher.

Characteristics desired for the binder are not only high resistance to swelling with respect to the electrolyte. It is preferable that the binder is capable of moderately covering the surfaces of active material particles. Since the binder covers the surfaces of the active material particles, the side reaction between the active material and the electrolyte can be suppressed. However, if the surfaces of the active material particles are excessively covered with the binder, the internal resistance of the electrode increases, which is not preferable.

The inventors found that in an electrode including a binder and an active material represented by a general formula $Li_xM_yO_2$ ($0 \leq x \leq 1.33$, $0.5 \leq y \leq 1$, and M contains at least one element selected from the group consisting of Ni, Co, and Mn), when the binder includes a polymer that contains a monomer containing a nitrogen atom, the monomer comprising at least one of acrylonitrile and imide compounds and, in a pore size distribution obtained by mercury porosimetry for the electrode, a pore median diameter (d50) is represented by D [um] and a pore specific surface area is represented by S [$m^2$/g], an electrode satisfying $S/D \geq 35$ has high output and excellent high temperature durability.

Since the binder including the polymer that contains the monomer containing the nitrogen atom has a large polarity in a molecule, it is easy to cover the surfaces of the active material particles represented by the general formula $Li_xM_yO_2$ ($0 \leq x \leq 1.33$, $0.5 \leq y \leq 1$, and M contains at least one element selected from the group consisting of Ni, Co, and Mn). That is, according to such a combination, the side reaction between the active material and the electrolyte can be suppressed.

In addition, the binder including the polymer that contains the monomer containing the nitrogen atom is hardly swollen with respect to the electrolyte even under the high temperature environment. Therefore, the capacity of the secondary battery is hardly lowered when the charge and the discharge are repeated in the high temperature environment. That is, the electrode according to the approach has excellent cycle life characteristics.

Furthermore, in the electrode according to the approach, in the pore size distribution of the electrode obtained by mercury porosimetry, the following formula (1) is satisfied when a pore median diameter (d50) is represented by D [$\mu$m] and a pore specific surface area is represented by S [$m^2$/g]:

$$S/D \geq 35 \ ... \ (1).$$

When the electrode satisfies the above formula (1), the pore specific surface area S is sufficiently large, and thus the reaction area between the active material and the electrolyte is large. In addition, since the pore median diameter D is sufficiently small, an electron conduction path between the active materials is sufficiently formed. In addition, since the binder includes the polymer that contains the monomer containing the nitrogen atom, it is possible to provide an electrode having high output and excellent high temperature durability. When S/D is less than 35, the pore specific surface area S is small, and thus the reaction area between the active material decreases. Thus, the output characteristics tend to deteriorate. Alternatively, in this case, since the pore median diameter D is large, the portion where the electron conduction path between the active materials is divided increases, and the output characteristics tend to deteriorate. Note that the dimension of S/D is [m/g]. The S/D is preferably 35 or more, and more preferably 50 or more. According to one aspect, the S/D may be 100 or less, or 200 or less.

As described above, the binder according to the approach hardly contains the electrolyte even in the high temperature environment and is not easily swollen. Therefore, the value of S/D hardly changes even after the charge and discharge cycle is repeated. On the other hand, in the case of using the binder which is liable to swell with respect to the electrolyte such as PVdF, the value of S/D tends to be changed by repeating the charge and discharge cycle.

The pore specific surface area S $[m^2/g]$ is a value calculated when the electrode is subjected to mercury porosimetry and each pore is assumed to be cylindrical. The measurement method of the mercury porosimetry will be described below, but when the pore specific surface area is calculated, the weight of the current collector included in the electrode is not taken into account. The pore specific surface area S is preferably within a range of 3.5 $m^2/g$ to 15 $m^2/g$ and more preferably within a range of 3.5 $m^2/g$ to 8.0 $m^2/g$. If the pore specific surface area S is excessively small, there is a possibility that the reaction area between the active material and the electrolyte will decrease and the output characteristics will become inferior. If the pore specific surface area S is excessively large, the side reaction with the electrolyte on the surface of the active material increases, and there is a possibility that battery life characteristics will deteriorate.

The pore median diameter D (d50) can be obtained from the pore size distribution obtained by performing mercury porosimetry on the electrode. The pore median diameter D is preferably within a range of 0.05 um to 0.2 um and more preferably within a range of 0.06 um to 0.15 $\mu$m. If the pore median diameter D is excessively small, the ion conductivity in the active material-containing layer may decrease. If the pore median diameter D is excessively large, there is a possibility that the output characteristics will deteriorate because the number of portions where the electron conduction path between the active materials is divided increases.

It is preferable that the pore median diameter D and the pore specific surface area S are values measured for the pore diameters existing within a range of 0.003 $\mu$m to 0.5 $\mu$m in the pore size distribution of the electrode obtained by the mercury porosimetry described below. That is, in the pore size distribution of the electrode obtained by the mercury porosimetry, the pore median diameter D and the pore specific surface area S measured from the pore diameter existing within a range of 0.003 $\mu$m to 0.5 um preferably satisfy S/D $\geq$ 35 and more preferably satisfy S/D $\geq$ 50. Considering only the pores having a size within a range of 0.003 um to 0.5 $\mu$m, it is possible to eliminate the influence of very large pores formed by unexpected factors. Note that the lower limit of 0.003 um is set to eliminate pores smaller than the measurement limit of the mercury porosimetry.

Hereinafter, the electrode according to the approach will be described in detail. The electrode according to the approach can be used as, for example, an electrode for a secondary battery. The electrode according to the approach can be used as, for example, a positive electrode and/or a negative electrode for a secondary battery.

The electrode according to the approach may include a current collector and an active material-containing layer. The active material-containing layer can be formed on one side or both sides of the current collector. The active material-containing layer includes an active material represented by a general formula $Li_xM_yO_2$ ($0 \leq x \leq 1.33$, $0.5 \leq y \leq 1$, and M contains at least one element selected from the group consisting of Ni, Co, and Mn), and a binder including a polymer that contains a monomer containing a nitrogen atom. The active material-containing layer includes a plurality of pores. The plurality of pores may formed among particles of, for example, active material particles and a binder. The plurality of pores may include pores present in the active material particles. The active material-containing layer may contain a conductive agent. In the following, the active material represented by the general formula $Li_xM_yO_2$ ($0 \leq x \leq 1.33$, $0.5 \leq y \leq 1$, and M contains at least one element selected from the group consisting of Ni, Co, and Mn) may be referred to as an "active material represented by the general formula $Li_xM_yO_2$".

The active material-containing layer contains, as the active material, at least one selected from oxides represented by the general formula $Li_xM_yO_2$. Examples of the oxides represented by the general formula $Li_xM_yO_2$ include manganese dioxide ($MnO_2$), nickel oxide, lithium manganese composite oxide (for example, $Li_xMn_2O_4$ or $Li_xMnO_2$; $0 < x \leq 1$), lithium nickel composite oxide (for example, $Li_xNiO_2$; $0 < x \leq 1$), lithium cobalt composite oxide (for example, $Li_xCoO_2$; $0 < x \leq 1$), lithium nickel cobalt composite oxide (for example $Li_xNi_{1-y}CO_yO_2$; $0 < x \leq 1$, $0 < y < 1$), lithium manganese cobalt composite oxide (for example $Li_xMn_yCo_{1-y}O_2$; $0 < x \leq 1$, $0 < y < 1$), lithium manganese nickel composite oxide having a spinel structure (for example, $Li_xMn_{2-y}Ni_yO_4$; $0 < x \leq 1$, $0 < y < 2$), and lithium nickel cobalt manganese composite oxide ($Li_xNi_{1-y-z}Co_yMn_zO_2$; $0 < x \leq 1$, $0 < y < 1$, $0 < z < 1$, $y + z < 1$).

The active material-containing layer may further contain active materials other than these oxides. Examples of other active materials include iron oxide, copper oxide, lithium phosphorus oxide having an olivine structure (for example, $Li_xFePO_4$; $0 < x \leq 1$, $Li_xFe_{1-y}Mn_yPO_4$; $0 < x \leq 1$, $0 < y < 1$, $Li_xCoPO_4$; $0 < x \leq 1$), iron sulfate ($Fe_2(SO_4)_3$), and vanadium oxide (for example, $V_2O_5$).

The active material-containing layer preferably includes, among the oxides represented by the general formula $Li_xM_yO_2$, at least one selected from the group consisting of lithium manganese composite oxide (for example, $Li_xMn_2O_4$ or $Li_xMnO_2$; $0 < x \leq 1$), lithium nickel composite oxide (for example, $Li_xNiO_2$; $0 < x \leq 1$), lithium cobalt composite oxide (for example, $Li_xCoO_2$; $0 < x \leq 1$), lithium nickel cobalt composite oxide (for example, $Li_xNi_{1-y}Co_yO_2$; $0 < x \leq 1$, $0 < y < 1$), lithium manganese cobalt composite oxide (for example, $Li_xMn_yCo_{1-y}O_2$; $0 < x \leq 1$, $0 < y < 1$), lithium nickel cobalt manganese composite oxide ($Li_xNi_{1-y-z}Co_yMn_zO_2$; $0 < x \leq 1$, $0 < y < 1$, $0 < z < 1$, $y + z < 1$), and lithium manganese nickel composite oxide having a spinel structure (for example, $Li_xMn_{2-y}Ni_yO_4$; $0 < x \leq 1$, $0 < y < 2$). The inclusion of such an oxide can make it possible to manufacture a secondary battery having high output and excellent life characteristics.

The ratio of the weight of the active material represented by the general formula $Li_xM_yO_2$ to the total weight of the active material contained in the active material-containing layer is, for example, within a range of 50 wt% to 100 wt% and preferably within a range of 80 wt% to 100 wt%.

The active material represented by the general formula $Li_xM_yO_2$ has, for example, a particle shape and contains primary particles and/or secondary particles. As long as the electrode according to the approach satisfies S/D $\geq$ 35, the active material represented by the general formula $Li_xM_yO_2$ may exist as primary particles, or may exist as secondary particles.

The average particle size of the active material particles represented by the general formula $Li_xM_yO_2$ is, for example, within a range of 0.1 um to 50 um and preferably within a range of 3 um to 15 $\mu$m. When the average particle size of the active material particles represented by the general formula $Li_xM_yO_2$ is within the above range, a secondary battery having high output and excellent life characteristics can be manufactured.

The binder contained in the active material-containing layer is blended so as to fill a gap of dispersed active materials and bind the active material and the current collector. The binder includes a polymer that contains a monomer containing a nitrogen atoms, the monomer comprising at least one of acrylonitrile and imide compounds. The binder may consist of only the polymer that contains the monomer containing the nitrogen atom. In this specification, the term "polymer" includes the concept of a polymer including one kind of monomer and the concept of a copolymer containing plural kinds of monomers. When the binder includes a copolymer, for example, at least one of the monomer components constituting the copolymer contains a nitrogen atom. It is preferable that all the monomer components constituting the copolymer contain a nitrogen atom. The polymer that contains the monomer containing the nitrogen atom has a large polarity in the molecule and thus has a large interaction with the active material particles. As a result, since it is easy for such a polymer to cover the surfaces of the active material particles, the side reaction between the active material particles and the electrolyte tend to be reduced.

The polymer contained in the binder may consist of only a monomer containing a nitrogen atom. However, the polymer contained in the binder is preferably a copolymer. In a case in which the polymer is a copolymer, the copolymer may contain, in addition to the monomer containing the nitrogen atom, (meth)acrylate, (meth)acrylamide, vinyl cyanide monomer, carboxyl monomer, and the like. In this case, the flexibility of the active material-containing layer is improved. The copolymer contained in the binder preferably contains a monomer containing a nitrogen atom in a proportion of 50 mol% to 95 mol%. If the proportion of the monomer containing the nitrogen atom in the copolymer component is excessively low, it is not preferable because the binding property of the binder may be lowered when the secondary battery is operated or stored under a high temperature environment.

Examples of the monomer containing the nitrogen atom include acrylonitrile and imide compounds. From the viewpoint of suppressing deterioration of the binding property when the secondary battery is operated in a high temperature environment or stored, the polymer preferably contains acrylonitrile as the monomer component.

The polymer contained in the binder is preferably a polyacrylonitrile copolymer. Since the polyacrylonitrile copolymer hardly swells with respect to the electrolyte described below, there is an advantage that it is unlikely for the electrode structure to change even when the charge and discharge are repeated in a high temperature environment. The polyacrylonitrile copolymer may contain, in addition to acrylonitrile, (meth)acrylate, (meth)acrylamide, a vinyl cyanide monomer, a carboxyl monomer, and the like, as the monomer.

The ratio of the weight of the polymer that contains the monomer containing the nitrogen atom to the weight of the binder is preferably 60 wt% or more. If the ratio is less than 60 wt%, the high temperature durability tends to be inferior. The reason is considered to be that the content of binder of a kind different from the polymer that contains the monomer containing the nitrogen atom is high relative to the weight of the binder, and the binder of the different kind are liable to swell in a high-temperature environment. The ratio of the weight of the polymer that contains the monomer containing the nitrogen atom to the weight of the binder is preferably 70 wt% or more, more preferably 80 wt% or more, and furthermore preferably 90 wt% or more. The ratio of the weight is most preferably 100 wt%.

The ratio of the weight of the polyacrylonitrile copolymer to the weight of the binder is, for example, 50 wt% or more. It is preferable that the ratio is higher. If the ratio is less than 50 wt%, there is a possibility that the binder will swell in a high-temperature environment. When the binder swells, there is a possibility that the output property and the life characteristics deteriorate due to the deterioration of the binding property.

The binder may contain, in addition to the polymer that contains the monomer containing the nitrogen atom, at least one selected from a copolymer containing methacrylate having a phosphoric acid group, polytetrafluoro ethylene (PTFE), polyvinylidene fluoride (PVdF), a fluorine-based rubber, a polyacrylic acid compound, a carboxyl methyl cellulose (CMC), and a salt of CMC.

Among them, it is preferable that the binder further contains a copolymer containing methacrylate having a phosphoric acid group. When the binder contains the copolymer containing methacrylate having the phosphoric acid group, the binding property of the active material particles and the conductive agent in the active material-containing layer and the binding property between the active material-containing layer and the current collector can be further improved. Examples of the copolymer containing methacrylate having the phosphoric acid group include copolymers of methacrylate having a phosphoric acid group and acrylonitrile.

The conductive agent can be blended so as to increase the current collection performance and suppress the contact resistance between the active material and the current collector. Examples of the conductive agent include vapor grown carbon fiber (VGCF), carbon black such as acetylene black, graphite, and carbonaceous materials such as a carbon nanofiber and a carbon nanotube. One of these materials may be used as the conductive agent, or two or more of these materials may be combined and used as the conductive agent. Alternatively, instead of using the conductive agent, carbon coating or electron conductive inorganic material coating may be performed on the surfaces of the active material particles.

It is preferable that the active material and the binder in the active material-containing layer are respectively blended in a proportion within a range of 80 mass% to 95 mass% and within a range of 2 mass% to 17 mass%.

When the content of the binder is 2 mass% or more, sufficient electrode strength can be obtained. The binder can also function as an insulator. Therefore, when the content of the binder is 17 mass% or less, the content of an insulating material included in the electrode is reduced, and thus, internal resistance can be reduced.

When the conductive agent is added, it is preferable to blend the conductive agent in a ratio of 3 mass% to 18 mass% in the active material-containing layer. When the content of the conductive agent is 3 mass% or more, the above-described effect can be exhibited. In addition, when the content of the conductive agent is 18 mass% or less, the ratio of the conductive agent brought into contact with the electrolyte can be reduced. When this ratio is low, decomposition of the electrolyte can be reduced under high temperature storage.

The current collector is preferably an aluminum foil, or an aluminum alloy foil including at least one element selected from Mg, Ti, Zn, Ni, Cr, Mn, Fe, Cu, and Si. Considering the expansion and contraction of the active material due to the charge and discharge of the secondary battery, it is more desirable to use a current collector of an electrolytic foil, the surface of which is roughly processed.

A thickness of the aluminum foil or the aluminum alloy foil is preferably within a range of 5 $\mu$m to 20 $\mu$m and more preferably within a range of 15 $\mu$m or less. The aluminum foil has preferably a density of 99 mass% or more. The content of a transition metal such as iron, copper, nickel, and chromium contained in the aluminum foil or the aluminum alloy foil is preferably 1 mass% or less.

In addition, the current collector can include a portion on one side of which the active material-containing layer is not formed. This portion can act as a current collector tab.

The density of the electrode (not including the current collector) according to the approach is, for example, within a range of 2.5 g/cc to 3.8 g/cc and preferably within a range of 2.8 g/cc to 3.6 g/cc. When the electrode density is within this range, it is preferable because the energy density and the retention performance of the electrolyte are excellent.

<Mercury Porosimetry>

The mercury porosimetry performed on the electrode will be described. Thereby, the pore size distribution graph of the active material-containing layer contained in the electrode is obtained, and the pore specific surface area and the pore median diameter can be obtained. The current collector does not include a pore that can be detected by the mercury porosimetry. Therefore, the measurement result of the pore size distribution of the electrode can be regarded as a measurement result of the pore size distribution of the active material-containing layer.

In order to obtain the electrode to be measured, the battery is placed in a glove box filled with argon gas and the battery is disassembled therein. The electrode to be measured is extracted from the disassembled battery. The extracted electrode is washed with an ethyl methyl carbonate solvent and dried.

Next, a plurality of samples (including the current collector) having a size of about 50 mm $\times$ 50 mm are cut out from the dried electrode. The total weight of the cut samples is set to about 1 g including the current collector. These are placed in a measurement cell and measurement is performed under the conditions of an initial pressure of 5 kPa (corresponding to about 0.7 psia, a pore diameter of about 250 um) and a final termination pressure of about 60,000 psia (corresponding to a pore diameter of about 0.003 $\mu$m) . Due to the measurement, the pore size distribution graph of the active material-containing layer is obtained, and the pore specific surface area and the pore median diameter can be obtained. When the pore specific surface area is calculated, the weight of the current collector is subtracted from the weight of the electrode as the sample placed in the measurement cell. For example, in the case of using an aluminum foil as the current collector, the weight of the current collector is calculated in consideration of the specific gravity of aluminum of 2.7 g/cc and the weight of the current collector is subtracted from the weight of the sample.

For example, Shimadzu Autopore Model 9520 type can be used as a measurement apparatus of the mercury porosimetry. From the pore size distribution obtained by the mercury porosimetry, a pore volume, a pore median diameter (d50), and a mode diameter can be determined.

The analytical principle of the mercury porosimetry is based on Washburn's equation (A):

$$D = -4\gamma\cos\theta/P \;\;\ldots\;\; (A).$$

Here, P is the applied pressure, D is the pore diameter, $\gamma$ is the surface tension of mercury (480 dyne·cm$^{-1}$), and $\theta$ is 140° in terms of a contact angle between mercury and a pore wall surface. Since $\gamma$ and $\theta$ are constants, the relationship between the applied pressure P and the pore diameter D is obtained from Washburn's equation, and the pore median diameter and its volume distribution can be derived by measuring the mercury penetration volume at that time.

<Identification of Presence or Absence of Nitrogen Atom>

It can be confirmed by a glow discharge optical emission spectrometry (GD-OES) that the binder contains the polymer that contains the monomer containing the nitrogen atom.

First, the battery to be measured is placed in the glove box filled with argon gas, and the battery is disassembled therein. The electrode to be measured is extracted from the disassembled battery. The extracted electrode is washed with an ethyl methyl carbonate solvent and dried. The presence or absence of N element can be identified by performing the glow discharge optical emission spectrometry on the dried electrode surface.

Furthermore, the type of the polymer contained in the binder can be identified by performing infrared absorption spectroscopy (IR) according to the following procedure.

First, the battery to be measured is placed in the glove box filled with argon gas, and the battery is disassembled therein. The electrode to be measured is extracted from the disassembled battery. The extracted electrode is washed with an ethyl methyl carbonate solvent and dried.

Next, in order to extract the binder from the active material-containing layer, the binder contained in the active material-containing layer is dissolved in dimethylformamide. When the active material and/or the conductive agent contained in the active material-containing layer is mixed in the extracted solution, they are removed by, for example, filtration. The binder can be obtained by evaporating dimethylformamide from the solution in which the binder is dissolved. The extracted binder is measured by IR spectroscopy. Due to the IR spectroscopy measurement, it is possible to identify the polymer of the binder contained in the active material-containing layer.

For example, when a peak derived from a nitrile bond can be confirmed in the vicinity of 2,200 cm$^{-1}$ in an infrared absorption spectrum, it can be determined that the binder contains polyacrylonitrile or a polyacrylonitrile copolymer. In the infrared absorption spectrum, when a peak derived from a carbon-fluorine bond can be confirmed in the vicinity of 1,200 cm$^{-1}$, it can be determined that the binder contains polyvinylidene fluoride (PVdF).

In addition, in the infrared absorption spectrum obtained by the IR spectroscopy, it is possible to quantify each component contained in the binder from the detected peak intensity ratio.

<Measurement of Average Particle Size of Active Material Particles>

The average particle size of the active material particles can be measured by performing a laser diffraction method by the following procedure.

As the measurement apparatus, for example, a laser diffraction type distribution measurement apparatus (Shimadzu SALD-300) is used. When the active material is incorporated in the battery, it can be extracted as follows. First, the battery is put in a discharged state. For example, the battery can be in a discharged state by discharging the battery to a rated final voltage at a current of 0.1 C in an environment of 25°C. Next, the battery in the discharged state is disassembled, and the electrode (for example, the positive electrode) is extracted. The extracted electrode is washed with, for example, methyl ethyl carbonate.

Next, the active material is extracted from the electrode to obtain a measurement sample. The extraction process is performed in such a manner that the binder component is washed off, for example, N-methyl-2-pyrrolidone (NMP), and then a conductive agent is removed with a mesh having an appropriate aperture. These components, if slightly left, may be removed by a heat treatment in air (e.g., at 250°C for 30 minutes).

After that, about 0.1 g of the sample, a surfactant, and 1 mL to 2 mL of distilled water are added to a beaker, sufficiently stirred, and injected into a stirring tank to prepare a sample solution. Using this sample solution, the luminous intensity distribution is measured 64 times at intervals of 2 seconds, and the particle size distribution data is analyzed.

<Production Method of Electrode>

When the active material-containing layer is formed on one side or both sides of the current collector, migration of the binder easily occurs if the solvent containing the binder-containing slurry according to the approach is abruptly vaporized. The migration is a phenomenon in which the binder moves in a direction opposite to the current collector at the time of drying the solvent after applying the slurry to the current collector. When the migration occurs, the binder simultaneously aggregates and fills the pores in the electrode. As a result, the pore median diameter D slightly decreases and the pore specific surface area S greatly decreases, as compared with a case in which no migration occurs. Since the decrease rate of the pore specific surface area S is larger than the decrease rate of the pore median diameter D, the ratio S/D decreases when the migration occurs.

By producing the electrode under the condition that the migration hardly occurs, the pore median diameter D can be decreased and the pore specific surface area S can be increased, so that the ratio S/D can be increased. In order to make the migration less likely to occur at the time of producing the electrode, it is effective to include a process of drying the applied slurry stepwise. The stepwise drying process includes, for example, a two-step process of a preliminary drying process performed at a relatively low temperature and a main drying process performed at a relatively high temperature. The preliminary drying process is a drying process performed at a lower temperature than the main drying process.

Note that the migration is likely to occur when the binder with low specific gravity is used. For example, the migration tends to occur when the binder containing the polyacrylonitrile copolymer is used.

Therefore, the electrode according to the approach is produced, for example, as follows.

First, an active material, a conductive agent, and a binder are suspended in a solvent to prepare a slurry. The slurry is applied onto one surface or both of reverse surfaces of a current collector. Next, the applied slurry is preliminarily dried at a temperature of 80°C to 100°C. The preliminary drying is performed, for example, for 1 second to 60 seconds. After that, main drying is performed at a temperature of 130°C or more. The main drying is carried out, for example, for 5 seconds to 300 seconds. Thus, a laminate of the active material-containing layer and the current collector is obtained. Then, the laminate is subjected to pressing. The electrode can be produced in this manner.

The ratio S/D can be adjusted by appropriately setting the average particle size of the active material to be used, the presence or absence of preliminary drying, the press pressure of the electrode, the amount of the conductive agent, and the like.

For example, when the average particle size of the active material is increased, the pore specific surface area S becomes large and the pore median diameter D decreases, so the ratio S/D tends to increase. In addition, for example, when the preliminary drying is performed, the ratio S/D tends to increase as compared with a case in which the preliminary driving is not performed. In addition, for example, when the amount of the conductive agent is increased, the specific surface area S of the fine pores is increased, so the ratio S/D tends to increase.

According to the first approach, the electrode is provided. This electrode includes a binder, and an active material represented by a general formula $Li_xM_yO_2$, where $0 \leq x \leq 1.33$ and $0.5 \leq y \leq 1$ are satisfied and M contains at least one element selected from the group consisting of Ni, Co, and Mn. The binder includes a polymer that contains a monomer containing a nitrogen atom. In the pore size distribution of the electrode according to mercury porosimetry, the following formula (1) is satisfied when a pore median diameter is represented by D [$\mu$m] and a pore specific surface area is represented by S [$m^2$/g]:

$$S/D \geq 35 \ ... \ (1).$$

Therefore, according to the approach, it is possible to provide an electrode having high output and excellent high temperature durability.

(Second Approach)

A secondary battery according to the approach includes a positive electrode, a negative electrode, and an electrolyte. This secondary battery includes the electrode according to the first approach as the positive electrode. The secondary battery may further include a separator disposed between the positive electrode and the negative electrode.

The positive electrode, the negative electrode, and the separator can constitute an electrode group. The electrolyte is held in the electrode group.

The secondary battery can further include a container member which stores the electrode group and the electrolyte.

The secondary battery can further include a negative electrode terminal electrically connected to the negative electrode and a positive electrode terminal electrically connected to the positive electrode.

The secondary battery may be, for example, a lithium ion secondary battery. In addition, the secondary battery includes a nonaqueous electrolyte secondary battery including a nonaqueous electrolyte.

Hereinafter, the positive electrode, the negative electrode, the electrolyte, the separator, the container member, the negative electrode terminal, and the positive electrode terminal will be described in detail.

(1) Positive Electrode

The positive electrode can include a positive electrode current collector and a positive electrode active material-containing layer. The positive electrode current collector and the positive electrode active material-containing layer can be a current collector and an active material-containing layer that can be included in the electrode according to the first approach, respectively.

The electrode according to the first approach can function as the positive electrode according to this approach.

(2) Negative Electrode

The negative electrode may include a negative electrode current collector and a negative electrode active material-containing layer. The negative electrode active material-containing layer may be formed on both surfaces or one surface of the negative electrode current collector. The negative electrode active material-containing layer can contain a negative electrode active material, and optionally a conductive agent and a binder.

Examples of the negative electrode active material include lithium titanate having a ramsdellite structure (for example, $Li_{2+y}Ti_3O_7$, $0 \leq y \leq 3$), lithium titanate having a spinel structure (for example, $Li_{4+x}Ti_5O_{12}$, $0 \leq x \leq 3$), monoclinic titanium dioxide ($TiO_2$), anatase type titanium dioxide, rutile type titanium dioxide, hollandite type titanium composite oxide, orthorhombic titanium-containing composite oxide, and monoclinic niobium titanium composite oxide.

Examples of the orthorhombic titanium-containing composite oxide include a compound represented by $Li_{2+a}M(I)_{2-b}Ti_{6-c}M(II)_dO_{14+\sigma}$. Here, M(I) is at least one selected from the group consisting of Sr, Ba, Ca, Mg, Na, Cs, Rb and K. M(II) is at least one selected from the group consisting of Zr, Sn, V, Nb, Ta, Mo, W, Y, Fe, Co, Cr, Mn, Ni and Al. The respective subscripts in the composition formula are specified as follows: $0 \leq a \leq 6$, $0 \leq b < 2$, $0 \leq c < 6$, $0 \leq d < 6$, and $-0.5 \leq \sigma \leq 0.5$. Specific examples of the orthorhombic titanium-containing composite oxide include $Li_{2+a}Na_2Ti_6O_{14}$ ($0 \leq a \leq 6$).

Examples of the monoclinic niobium titanium composite oxide include a compound represented by $Li_xTi_{1-y}M1_yNb_{2-z}M2_zO_{7+\delta}$. Here, M1 is at least one selected from the group consisting of Zr, Si, and Sn. M2 is at least one selected from the group consisting of V, Ta, and Bi. The respective subscripts in the composition formula are specified as follows: $0 \leq x \leq 5$, $0 \leq y < 1$, $0 \leq z < 2$, and $-0.3 \leq \delta \leq 0.3$. Specific examples of the monoclinic niobium titanium composite oxide include $Li_xNb_2TiO_7$ ($0 \leq x \leq 5$).

Another example of the monoclinic niobium titanium composite oxide is a compound represented by $Ti_{1-y}M3_{y+z}Nb_{2-z}O_{7-\delta}$. Here, M3 is at least one selected from Mg, Fe, Ni, Co, W, Ta, and Mo. The respective subscripts in the composition formula are specified as follows: $0 \leq y < 1$, $0 \leq z \leq 2$, and $-0.3 \leq \delta \leq 0.3$.

A conductive agent is added in order to increase the current-collecting performance and to suppress the contact resistance between the active material and the current collector. Examples of the conductive agent include carbonaceous materials such as vapor grown carbon fiber (VGCF), carbon black such as acetylene black, and graphite. The conductive agents may be used alone or as a mixture of two or more kinds. Alternatively, instead of using the conductive agent, carbon coating or electron conductive inorganic material coating may be performed on surfaces of the active material particles.

A binder is added in order to fill a gap between dispersed active materials and to bind the active material and the negative electrode current collector. Examples of the binder include polytetrafluoroethylene (PTFE), polyvinylidene fluoride (PVdF), fluorine rubber, styrene butadiene rubber, polyacrylic acid compound, imide compound, carboxymethyl cellulose (CMC), and salts of CMC. The binders may be used alone or as a mixture of two or more kinds.

A compounding ratio of the negative electrode active material, the conductive agent and the binder in the negative electrode active material-containing layer can be appropriately changed according to the application of the negative electrode. It is preferable that the negative electrode active material, the conductive agent, and the binder are respectively added in a proportion within a range of 70% by mass to 96% by mass, 2% by mass to 28% by mass, and 2% by mass to 28% by mass. When the content of the conductive agent is not less than 2% by mass, the current-collecting performance of the negative electrode active material-containing layer can be improved. In addition, when the content of the binder is not less than 2% by mass, the binding property between the negative electrode active material-containing layer and the current collector is sufficient, and the excellent cycle performance can be expected. On the other hand, in order to make the capacity higher, it is preferable that the contents of the conductive agent and the binder are respectively not more than 28% by mass.

The negative electrode current collector is formed a material which is electrochemically stable at a potential at which lithium (Li) is inserted into and extracted from the active material, for example, a potential higher than 1.0 V (vs. Li/Li$^+$). For example, the current collector is preferably made of copper, nickel, stainless steel or aluminum, or an aluminum alloy including at least one element selected from Mg, Ti, Zn, Mn, Fe, Cu, and Si. The thickness of the current collector is preferably 5 $\mu$m to 20 um. The current collector having such a thickness can achieve a balance between the strength and reduction in weight of the electrode.

The negative electrode current collector may include a portion where the negative electrode active material-containing layer is not formed on a surface of the negative electrode current collector. This portion can serve as a negative electrode tab.

The density of the negative electrode active material-containing layer (not including the current collector) is preferably 1.8 g/cm$^3$ to 2.8 g/cm$^3$. The negative electrode, in which the density of the negative electrode active material-containing layer is within this range, is excellent in terms of energy density and holding property of the electrolyte. The density of the negative electrode active material-containing layer is more preferably 2.1 g/cm$^3$ to 2.6 g/cm$^3$.

The negative electrode can be produced by the following method, for example. First, a slurry is prepared by suspending a negative electrode active material, a conductive agent and a binder in a solvent. This slurry is applied onto both surfaces or one surface of the negative electrode current collector. Then, the coated slurry is dried to obtain a laminate of the negative electrode active material-containing layer and the negative electrode current collector. Thereafter, this laminate is pressed. In this way, a negative electrode is produced.

Alternatively, the negative electrode may be produced by the following method. First, a negative electrode active material, a conductive agent and a binder are mixed to obtain a mixture. Then, the mixture is formed into pellets. Subsequently, by arranging these pellets on the negative electrode current collector, a negative electrode can be obtained.

(3) Electrolyte

As the electrolyte, a liquid nonaqueous electrolyte or gel-like nonaqueous electrolyte can be used, for example. The liquid nonaqueous electrolyte is prepared by dissolving an electrolyte salt as a solute in an organic solvent. The concentration of the electrolyte salt is preferably 0.5 mol/L to 2.5 mol/L.

Examples of the electrolyte salt may include lithium salts such as lithium perchlorate (LiCLO$_4$), lithium hexafluorophosphate (LiPF$_6$), lithium tetrafluoroborate (LiBF$_4$), lithium hexafluoroarsenate (LiAsF$_6$), lithium trifluoromethansulfonate (LiCF$_3$SO$_3$), and lithium bistrifluoromethylsulfonylimide (LiN(CF$_3$SO$_2$)$_2$), and mixtures thereof. The electrolyte salt which is not easily oxidized even at a high potential is preferable, and LiPF$_6$ is most preferable.

Examples of the organic solvent may include cyclic carbonates such as propylene carbonate (PC), ethylene carbonate (EC), and vinylene carbonate (VC); linear carbonates such as diethyl carbonate (DEC), dimethyl carbonate (DMC), and methylethyl carbonate (MEC); cyclic ethers such as tetrahydrofuran (THF), 2-methyltetrahydrofuran (2MeTHF), and dioxolane (DOX); linear ethers such as dimethoxyethane (DME) and diethoxyethane (DEE); $\gamma$-butyrolactone (GBL), acetonitrile (AN), and sulfolane (SL). The organic solvents may be used alone or as a mixed solvent.

As the preferred organic solvent, for example, there are a mixed solvent obtained by mixing two or more kinds of propylene carbonate (PC), ethylene carbonate (EC), diethyl carbonate (DEC), dimethyl carbonate (DMC), and methyl ethyl carbonate (MEC), and a mixed solvent containing $\gamma$-butyrolactone (GBL). A secondary battery that is excellent in low temperature characteristics by using such a mixed solvent.

The gel nonaqueous electrolyte is prepared by combining a liquid nonaqueous electrolyte and a polymeric material. Examples of the polymer material include polyvinylidene fluoride (PVdF), polyacrylonitrile (PAN), polyethylene oxide (PEO), and a mixture thereof.

Alternatively, as the nonaqueous electrolyte, in addition to the liquid nonaqueous electrolyte and the gel-like nonaqueous electrolyte, a room temperature molten salt (ionic melt) including lithium ions, a polymer solid electrolyte, an inorganic solid electrolyte, or the like may be used.

The room temperature molten salt (ionic melt) refers to a compound which can exist as liquid at a room temperature (15°C to 25°C) in organic salts in which an organic cation and an organic anion are combined. Examples of the room temperature molten salt includes room temperature molten salts which exist as a liquid, room temperature molten salts which turn into liquid by being mixed with electrolyte salt, room temperature molten salts which turn into liquid by being dissolved in an organic solvent, and a mixture thereof. The room temperature molten salt, which is generally used in the secondary battery, has a melting point of not more than 25°C. In addition, the organic cation has generally a quaternary ammonium skeleton.

The polymer solid electrolyte is prepared by dissolving an electrolyte salt in a polymer material and solidifying it.

The inorganic solid electrolyte is a solid substance having Li ion conductivity.

(4) Separator

The separator is formed from, for example, a porous film including polyethylene (PE), polypropylene (PP), cellulose, and polyvinylidene difluoride (PVdF) or nonwoven fabric made of synthetic resin. From the viewpoint of safety, it is preferable to use a porous film made of polyethylene or polypropylene. This is because these porous films melt at a fixed temperature and can cut off a current.

(5) Container member

As the container member, for example, a container made of a laminated film or a metal case can be used.

The thickness of the laminated film is, for example, 0.5 mm or less and preferably 0.2 mm or less.

As the laminated film, a multilayer film including a plurality of resin layers and a metal film interposed between these resin layers is used. The resin layer includes, for example, polymeric materials such as polypropylene (PP), polyethylene (PE), nylon, and polyethylene terephthalate (PET). The metal layer is preferably made of aluminum foil or aluminum alloy foil to reduce the weight thereof. The laminated film can be formed into the shape of a container member by performing heat sealing.

The thickness of a wall of the metal case is, for example, 1 mm or less, preferably 0.5 mm or less, and more preferably 0.2 mm or less.

The metal case is made of aluminum or an aluminum alloy, for example. The aluminum alloy preferably contains an element such as magnesium, zinc, or silicon. When the aluminum alloy contains a transition metal such as iron, copper, nickel, or chromium, the content thereof is preferably 100 ppm by mass or less.

The shape of the container member is not particularly limited. The shape of the container member may be, for example, flat (thin), square, cylinder, coin, or button-shaped. The container member can appropriately be selected in accordance with battery dimensions or battery uses.

(6) Negative electrode terminal

The negative electrode terminal can be formed from, for example, a material having electric stability and conductivity, in which the potential with respect to lithium is within a range of 1 V to 3 V (vs Li/Li$^+$). More specifically, as the material of the negative electrode terminal, copper, nickel, stainless, or aluminum or an aluminum alloy containing at least one element selected from a group consisting of Mg, Ti, Zn, Mn, Fe, Cu, and Si can be cited. It is preferable to use aluminum or an aluminum alloy as the material of the negative electrode terminal. The negative electrode terminal is preferably made of the same material as that of the negative electrode current collector, so as to reduce contact resistance with the negative electrode current collector.

(7) Positive electrode terminal

The positive electrode terminal is made of a material that is electrically stable in a potential range of 3 V to 4.5 V with respect to oxidation-reduction potential of lithium (vs. Li/Li$^+$) and has a conductive property. Examples of the material for the positive electrode terminal include aluminum, or an aluminum alloy containing at least one element selected from Mg, Ti, Zn, Mn, Fe, Cu, and Si. In order to reduce the contact resistance between the positive electrode terminal and the positive electrode current collector, the positive electrode terminal is preferably made of the same material as that of the positive electrode current collector.

Next, the secondary battery according to the approach will be described in detail with reference to the drawings.

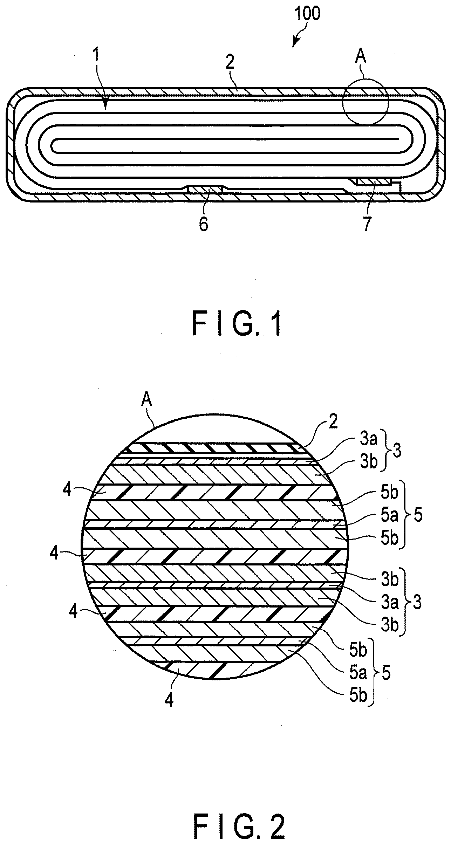

FIG. 1 is a sectional view schematically showing an example of a secondary battery according to an approach. FIG. 2 is an enlarged sectional view of a portion A of the secondary battery shown in FIG. 1.

The secondary battery 100 shown in FIG. 1 and FIG. 2 includes a bag-shaped container member 2 shown in FIG. 1, an electrode group 1 shown in FIG. 1 and FIG. 2, and an electrolyte (not shown). The electrode group 1 and the electrolyte are stored in the bag-shaped container member 2. The electrolyte (not shown) is held in the electrode group 1.

The bag-shaped container member 2 is formed from a laminate film including two resin layers and a metal layer disposed therebetween.

As shown in FIG. 1, the electrode group 1 is a flat wound electrode group. The flat wound electrode group 1 includes negative electrodes 3, separators 4, and positive electrodes 5 as shown in FIG. 2. The separator 4 is disposed between the negative electrode 3 and the positive electrode 5.

The negative electrode 3 includes a negative electrode current collector 3a and negative electrode active material-containing layers 3b. In the portion of the negative electrode 3 located at the outermost shell of the wound electrode group 1, the negative electrode active material-containing layer 3b is formed only on the inside surface side of the negative electrode current collector 3a, as shown in FIG. 2. In another portion of the negative electrode 3, the negative electrode active material-containing layer 3b is formed on both sides of the negative electrode current collector 3a.

The positive electrode 5 includes a positive electrode current collector 5a and positive electrode active material-containing layers 5b formed on both sides thereof.

As shown in FIG. 1, a negative electrode terminal 6 and a positive electrode terminal 7 are positioned near the outer end of the wound electrode group 1. The negative electrode terminal 6 is connected to the outermost part of the negative electrode current collector 3a. In addition, the positive electrode terminal 7 is connected to the outermost part of the positive electrode current collector 5a. The negative electrode terminal 6 and the positive electrode terminal 7 extend outward from opening portions of the bag-shaped container member 2. A thermoplastic resin layer is provided on the inner surface of the bag-shaped container member 2, and the openings are closed by thermal fusion bonding of the thermoplastic resin layer.

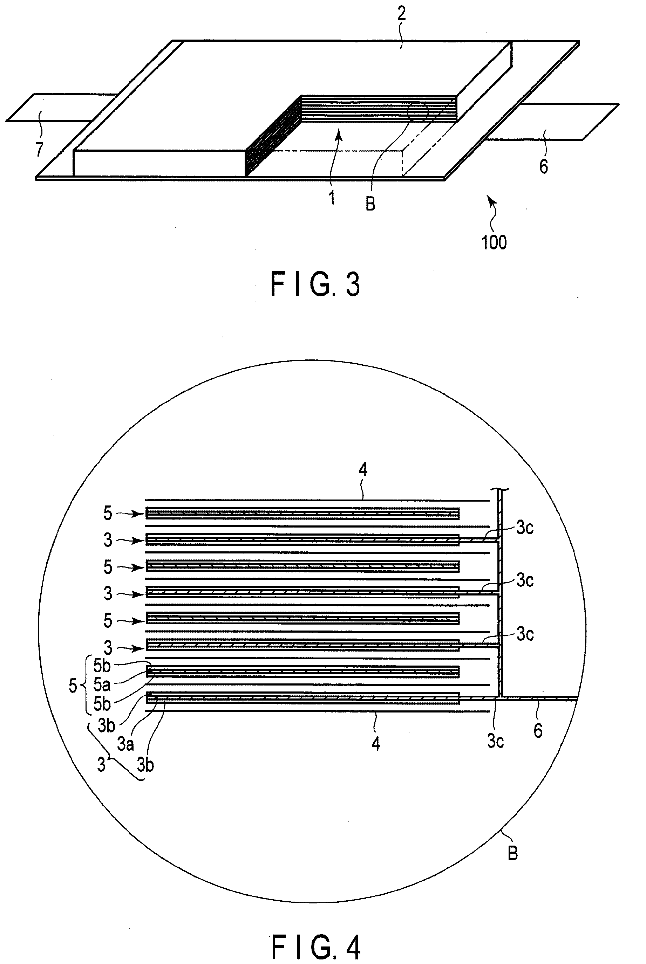

The secondary battery according to the approach is not limited to the secondary battery having the structure shown in FIGS. 1 and 2, and may be, for example, a battery having a structure shown in FIGS. 3 and 4.

FIG. 3 is a partial cut-away sectional perspective view schematically showing another example of the secondary battery according to the approach. FIG. 4 is an enlarged sectional view of a portion B of the secondary battery shown in FIG. 3.

The secondary battery 100 shown in FIGS. 3 and 4 includes an electrode group 1 shown in FIGS. 3 and 4, a container member 2 shown in FIG. 3, and an electrolyte (not shown). The electrode group 1 and the electrolyte are stored in the container member 2. The electrolyte is held in the electrode group 1.

The container member 2 is made of a laminate film including two resin layers and a metal layer intervening therebetween.

As shown in FIG 4, the electrode group 1 is a laminated electrode group. The laminated electrode group 1 has a structure in which a negative electrode 3 and a positive electrode 5 are alternately laminated with a separator 4 intervening therebetween.

The electrode group 1 includes plural of negative electrodes 3. Each of the negative electrodes 3 includes a negative electrode current collector 3a and a negative electrode active material-containing layer 3b carried on both surfaces of the negative electrode current collector 3a. In addition, the electrode group 1 includes plural of positive electrodes 5. Each of the positive electrodes 5 includes a positive electrode current collector 5a and a positive electrode active material-containing layer 5b carried on both surfaces of the positive electrode current collector 5a.

The negative electrode current collector 3a of each negative electrode 3 includes a portion 3c on one side where the negative electrode active material-containing layer 3b is not carried on any surfaces. This portion 3c acts as a negative electrode current collector tab. As shown in FIG. 4, the portion 3c acting as the negative electrode current collector tab does not overlap the positive electrode 5. In addition, plural of negative electrode current collector tabs (portion 3c) are electrically connected to the belt-shaped negative electrode terminal 6. A tip of the belt-shaped negative electrode terminal 6 is drawn outward from the container member 2.

In addition, although not shown, the positive electrode current collector 5a of each positive electrode 5 includes a portion on one side where the positive electrode active material-containing layer 5b is not carried on any surfaces. This portion acts as a positive electrode tab. Like the negative electrode tab (portion 3c), the positive electrode tab does not overlap the negative electrode 3. In addition, the positive electrode tab is positioned on the opposite side of the electrode group 1 with respect to the negative electrode tab (portion 3c). The positive electrode tab is electrically connected to the belt-shaped positive electrode terminal 7. A tip of the belt-shaped positive electrode terminal 7 is positioned on the opposite side to the negative electrode terminal 6 and is drawn outward from the container member 2.

The secondary battery according to the approach may constitute a battery module. The battery module may include plural of secondary batteries according to the approach.

In the battery module according to the approach, individual unit cells may be electrically connected in series or in parallel, or may be arranged in combination of series connection and parallel connection.

An example of the battery module according to the approach will be described with reference to the drawings.

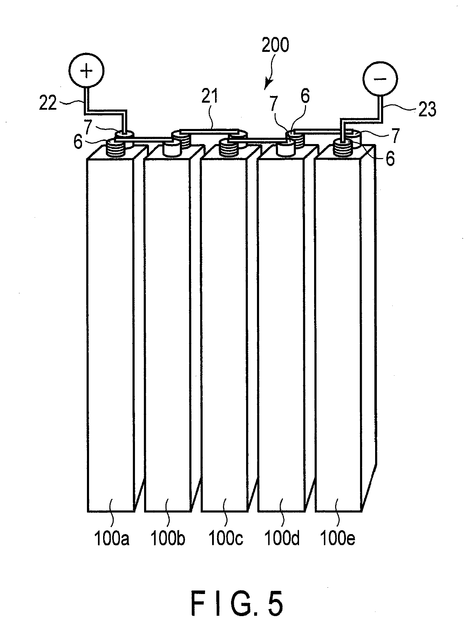

FIG. 5 is a perspective view schematically showing an example of the battery module according to the approach. The battery module 200 shown in FIG. 5 includes five unit cells 100a to 100e, four bus bars 21, a positive electrode-side lead 22, and a negative electrode-side lead 23. Each of the five unit cells 100a to 100e is the secondary battery according to the approach.

The bus bar 21 connects, for example, a negative electrode terminal 6 of one unit cell 100a and a positive electrode terminal 7 of the unit cell 100b positioned adjacent to the unit cell 100a. In this way, the five unit cells 100a to 100e are connected in series by the four bus bars 21. That is, the battery module 200 shown in FIG. 5 is a battery module of five in-series connection.

As shown in FIG. 5, the positive electrode terminal 7 of the unit cell 100a located at one end on the left among the five unit cells 100a to 100e is connected to the positive electrode-side lead 22 for external connection. In addition, the negative electrode terminal 6 of the unit cell 100e located at one end on the right among the five unit cells 100a to 100e is connected to the negative electrode-side lead 23 for external connection.

The secondary battery according to the second approach includes the electrode according to the first approach. Therefore, the secondary battery according to the approach has high output and is excellent in high temperature durability.

(Third Approach)

According to a third approach, a battery pack is provided. The battery pack includes the secondary battery according to the second approach. The battery pack includes one secondary battery according to the second approach, or may include a battery module with plural of secondary batteries.

The battery pack according to the approach may further include a protective circuit. The protective circuit has a function to control charging and discharging of the secondary battery. Alternatively, a circuit included in equipment where the battery pack serves as a power source (for example, electronic devices, vehicles, and the like) may be used as the protective circuit for the battery pack.

Moreover, the battery pack according to the approach may further comprise an external power distribution terminal. The external power distribution terminal is configured to externally output current from the secondary battery, and to input external current into the secondary battery. In other words, when the battery pack is used as a power source, the current is provided out via the external power distribution terminal. When the battery pack is charged, the charging current (including regenerative energy of a motive force of vehicles such as automobiles) is provided to the battery pack via the external power distribution terminal.

Next, an example of a battery pack according to the approach will be described with reference to the drawings.

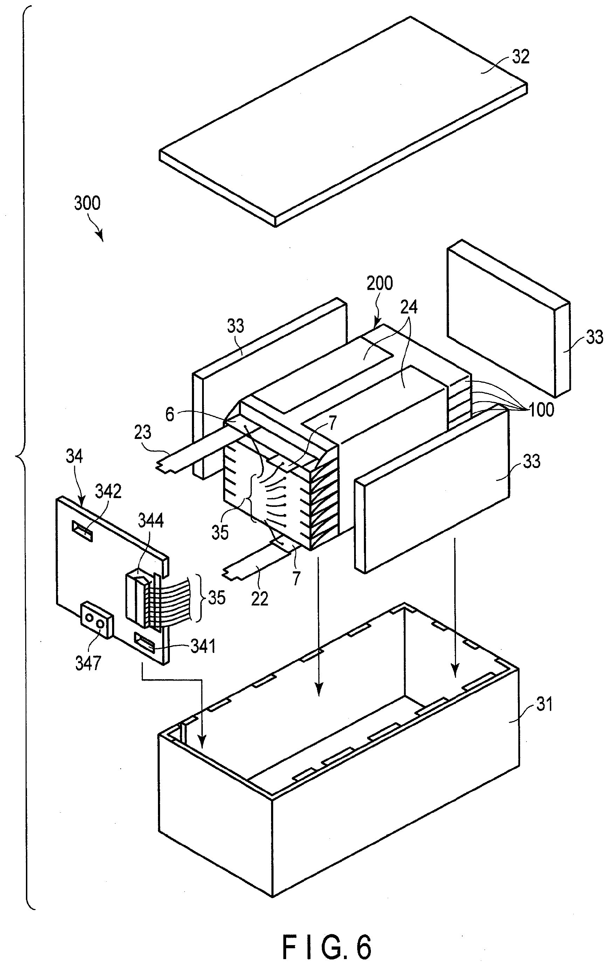

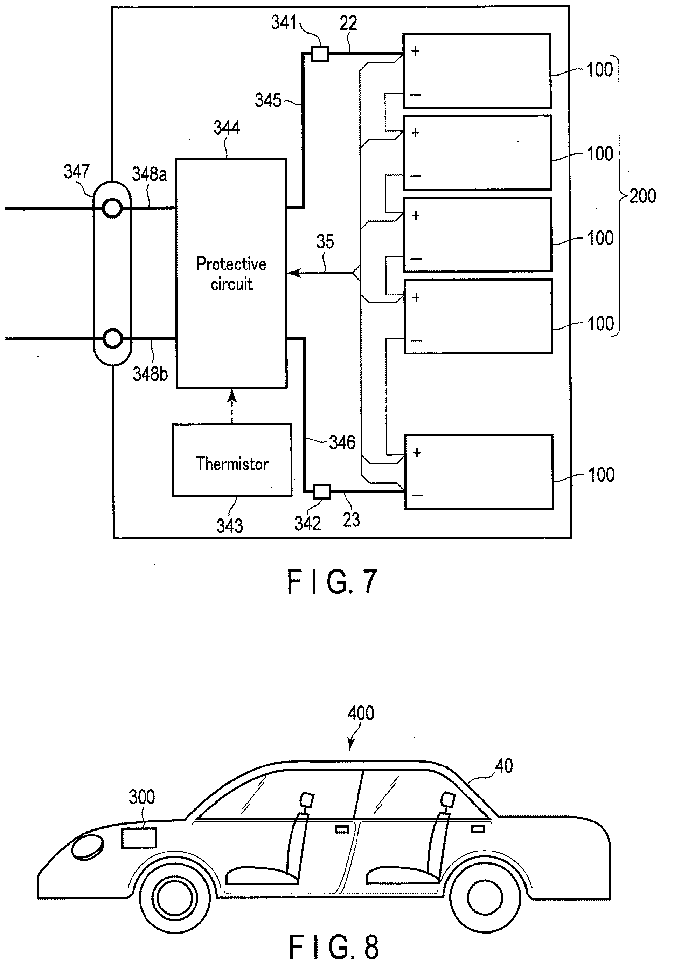

FIG. 6 is an exploded perspective view schematically showing an example of the battery pack according to the approach. FIG. 7 is a block diagram showing an example of an electric circuit of the battery pack shown in FIG. 6.

A battery pack 300 shown in FIGS. 6 and 7 includes a housing container 31, a lid 32, protective sheets 33, a battery module 200, a printed wiring board 34, wires 35, and an insulating plate (not shown).

A housing container 31 shown in FIG. 6 is a bottomed-square-shaped container having a rectangular bottom surface. The housing container 31 is configured to house protective sheet 33, a battery module 200, a printed wiring board 34, and wires 35. A lid 32 has a rectangular shape. The lid 32 covers the housing container 31 to house the battery module 200 and the like. Although not shown, opening(s) or connection terminal(s) for connecting to external device(s) and the like are provided on the housing container 31 and lid 32.

The battery module 200 includes plural battery cells 100, a positive electrode-side lead 22, a negative electrode-side lead 23, and an adhesive tape 24.

The battery cell 100 has, for example, a structure shown in FIGS. 1 and 2. At least one of the plural battery cells 100 is a secondary battery according to the second approach. The plural battery cells 100 are stacked such that the negative electrode terminals 6 and the positive electrode terminals 7, which extend outside, are directed toward the same direction. The plural battery cells 100 are electrically connected in series, as shown in FIG. 7. The plural battery cells 100 may alternatively be electrically connected in parallel, or connected in a combination of in-series connection and in-parallel connection. If the plural battery cells 100 are connected in parallel, the battery capacity increases as compared to a case in which they are connected in series.

The adhesive tape 24 fastens the plural battery cells 100. The plural battery cells 100 may be fixed using a heat-shrinkable tape in place of the adhesive tape 24. In this case, the protective sheets 33 are arranged on both side surfaces of the battery module 200, and the heat-shrinkable tape is wound around the battery module 200 and protective sheets 33. After that, the heat-shrinkable tape is shrunk by heating to bundle the plural battery cells 100.

One end of the positive electrode-side lead 22 is connected to the positive electrode terminal 7 of the battery cell 100 located lowermost in the stack of the battery cells 100. One end of the negative electrode-side lead 23 is connected to the negative electrode terminal 6 of the battery cell 100 located uppermost in the stack of the battery cells 100.

The printed wiring board 34 is arranged on the inner surface of the housing container 31 along the short side direction. The printed wiring board 34 includes a positive electrode-side connector 341, a negative electrode-side connector 342, a thermistor 343, a protective circuit 344, wirings 345 and 346, an external power distribution terminal 347, a plus-side (positive-side) wire 348a, and a minus-side (negative-side) wire 348b. One principal surface of the printed wiring board 34 faces the surface of the battery module 200 from which the negative electrode terminals 6 and the positive electrode terminals 7 extend out. An insulating plate (not shown) is disposed in between the printed wiring board 34 and the battery module 200.

The positive electrode-side connector 341 is provided with a through hole. By inserting the other end of the positive electrode-side lead 22 into the though hole, the positive electrode-side connector 341 and the positive electrode-side lead 22 become electrically connected. The negative electrode-side connector 342 is provided with a through hole.

By inserting the other end of the negative electrode-side lead 23 into the though hole, the negative electrode-side connector 342 and the negative electrode-side lead 23 become electrically connected.

The thermistor 343 is fixed to one principal surface of the printed wiring board 34. The thermistor 343 detects the temperature of each battery cell 100 and transmits detection signals to the protective circuit 344.

The external power distribution terminal 347 is fixed to the other principal surface of the printed wiring board 34. The external power distribution terminal 347 is electrically connected to device(s) that exists outside the battery pack 300.

The protective circuit 344 is fixed to the other principal surface of the printed wiring board 34. The protective circuit 344 is connected to the external power distribution terminal 347 via the plus-side wire 348a. The protective circuit 344 is connected to the external power distribution terminal 347 via the minus-side wire 348b. In addition, the protective circuit 344 is electrically connected to the positive electrode-side connector 341 via the wiring 345. The protective circuit 344 is electrically connected to the negative electrode-side connector 342 via the wiring 346. Furthermore, the protective circuit 344 is electrically connected to each of the plural battery cells 100 via the wires 35.

The protective sheets 33 are arranged on both inner surfaces of the housing container 31 along the long side direction and on one inner surface of the housing container 31 along the short side direction facing the printed wiring board 34 through the battery module 200. The protective sheet 33 is made of, for example, resin or rubber.

The protective circuit 344 controls charge and discharge of the plural battery cells 100. The protective circuit 344 is also configured to cut-off electric connection between the protective circuit 344 and the external power distribution terminal 347, based on detection signals transmitted from the thermistor 343 or detection signals transmitted from each battery cell 100 or the battery module 200.

An example of the detection signal transmitted from the thermistor 343 is a signal indicating that the temperature of the battery cell(s) 100 is detected to be a predetermined temperature or more. An example of the detection signal transmitted from each battery cell 100 or the battery module 200 is a signal indicating detection of over-charge, over-discharge, and overcurrent of the battery cell(s) 100. When detecting over-charge or the like for each of the battery cells 100, the battery voltage may be detected, or a positive electrode potential or negative electrode potential may be detected. In the latter case, a lithium electrode to be used as a reference electrode may be inserted into each battery cell 100.

Note, that as the protective circuit 344, a circuit included in a device (for example, an electronic device or an automobile) that uses the battery pack 300 as a power source may be used.

As described above, the battery pack 300 includes the external power distribution terminal 347. Hence, the battery pack 300 can output current from the battery module 200 to an external device and input current from an external device to the battery module 200 via the external power distribution terminal 347. In other words, when using the battery pack 300 as a power source, the current from the battery module 200 is supplied to an external device via the external power distribution terminal 347. When charging the battery pack 300, a charge current from an external device is supplied to the battery pack 300 via the external power distribution terminal 347. If the battery pack 300 is used as an onboard battery, the regenerative energy of the motive force of a vehicle can be used as the charge current from the external device.

Note that the battery pack 300 may include plural battery modules 200. In this case, the plural battery modules 200 may be connected in series, in parallel, or connected in a combination of in-series connection and in-parallel connection. The printed wiring board 34 and the wires 35 may be omitted. In this case, the positive electrode-side lead 22 and the negative electrode-side lead 23 may be used as the external power distribution terminal.

Such a battery pack is used for, for example, an application required to have the excellent cycle performance when a large current is taken out. More specifically, the battery pack is used as, for example, a power source for electronic devices, a stationary battery, or an onboard battery for various kinds of vehicles. An example of the electronic device is a digital camera. The battery pack is particularly favorably used as an onboard battery.

The battery pack according to the third approach includes the secondary battery according to the second approach. Therefore, the battery pack has high output and is excellent in high temperature durability.


(Fourth Approach)

According to a fourth approach, a vehicle is provided. The vehicle is equipped with the battery pack according to the third approach.

In a vehicle according to the approach, the battery pack is configured, for example, to recover regenerative energy from motive force of the vehicle. The vehicle may include a mechanism configured to convert kinetic energy of the vehicle into regenerative energy.

Examples of the vehicle include two- to four-wheeled hybrid electric automobiles, two- to four-wheeled electric automobiles, electric assist bicycles, and railway cars.

In the vehicle, the installing position of the battery pack is not particularly limited. For example, the battery pack may be installed in the engine compartment of the vehicle, in rear parts of the vehicle, or under seats.

The vehicle may be equipped with plural of battery packs. In such a case, the battery packs may be electrically connected in series, in parallel, or in a combination of in series connection and in parallel connection.

An example of the vehicle according to the approach will be described with reference to the drawings.

FIG. 8 is a sectional view schematically showing an example of a vehicle according to the approach.

The vehicle 400 shown in FIG. 8 includes a vehicle body 40 and a battery pack 300 according to the third approach. The vehicle 400 shown in FIG. 8 is a four-wheel automobile.

This vehicle 400 may have plural battery packs 300 installed. In such a case, the battery packs 300 may be connected in series, connected in parallel, or connected in a combination of in-series connection and in-parallel connection.

In FIG. 8, the battery pack 300 is installed in an engine compartment located at the front of the vehicle body 40. As described above, the battery pack 300 may be installed in rear sections of the vehicle body 40, or under a seat. The battery pack 300 may be used as a power source of the vehicle 400. In addition, the battery pack 300 can recover regenerative energy of a motive force of the vehicle 400.

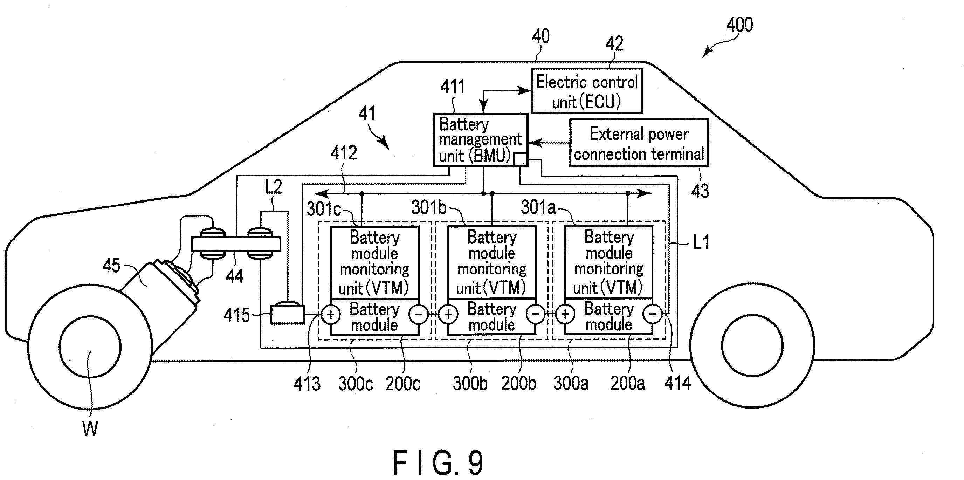

Next, with reference to FIG. 9, an aspect of operation of the vehicle according to the approach is explained.

FIG. 9 is a view schematically showing an example of the vehicle according to the approach. A vehicle 400, shown in FIG. 9, is an electric automobile.

The vehicle 400, shown in FIG. 9, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 9, the position of the vehicle power source 41 installed in the vehicle 400 is schematically shown.

The vehicle power source 41 includes plural (for example, three) battery packs 300a, 300b and 300c, a battery management unit (BMU) 411, and a communication bus 412.

The three battery packs 300a, 300b and 300c are electrically connected in series. The battery pack 300a includes a battery module 200a and a battery module monitoring unit 301a (for example, VTM: voltage temperature monitoring). The battery pack 300b includes a battery module 200b, and a battery module monitoring unit 301b. The battery pack 300c includes a battery module 200c, and a battery module monitoring unit 301c. The battery packs 300a, 300b and 300c can each be independently removed, and may be exchanged by a different battery pack 300.

Each of the battery modules 200a to 200c includes plural battery cells connected in series. At least one of the plural battery cells is the secondary battery according to the first approach. The battery modules 200a to 200c each perform charging and discharging via a positive electrode terminal 413 and a negative electrode terminal 414.

In order to collect information concerning security of the vehicle power source 41, the battery management unit 411 performs communication with the battery module monitoring units 301a to 301c and collects information such as voltages or temperatures of the battery cells 100 included in the battery modules 200a to 200c included in the vehicle power source 41.

The communication bus 412 is connected between the battery management unit 411 and the battery module monitoring units 301a to 301c. The communication bus 412 is configured so that multiple nodes (i.e., the battery management unit and one or more battery module monitoring units) share a set of communication lines. The communication bus 412 is, for example, a communication bus configured based on CAN (Control Area Network) standard.

The battery module monitoring units 301a to 301c measure a voltage and a temperature of each battery cell in the battery modules 200a to 200c based on commands from the battery management unit 411. It is possible, however, to measure the temperatures only at several points per battery module, and the temperatures of all of the battery cells need not be measured.

The vehicle power source 41 may also have an electromagnetic contactor (for example, a switch unit 415 shown in FIG. 9) for switching connection between the positive electrode terminal 413 and the negative electrode terminal 414. The switch unit 415 includes a precharge switch (not shown), which is turned on when the battery modules 200a to 200c are charged, and a main switch (not shown), which is turned on when battery output is supplied to a load. The precharge switch and the main switch include a relay circuit (not shown), which is turned on or off based on a signal provided to a coil disposed near a switch element.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 controls an output voltage based on control signals from the battery management unit 411 or the vehicle ECU 41, which controls the entire operation of the vehicle.

The drive motor 45 is rotated by electric power supplied from the inverter 44. The rotation is transferred to an axle and driving wheels W via a differential gear unit, for example.

The vehicle 400 also includes a regenerative brake mechanism, though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The direct current is inputted, for example, into the battery pack included the vehicle power source 41.

One terminal of a connecting line L1 is connected via a current detector (not shown) in the battery management unit 411 to the negative electrode terminal 414 of the vehicle power source 41. The other terminal of the connecting line L1 is connected to a negative electrode input terminal of the inverter 44.

One terminal of a connecting line L2 is connected via the switch unit 415 to the positive electrode terminal 413 of the vehicle power source 41. The other terminal of the connecting line L2 is connected to a positive electrode input terminal of the inverter 44.

The external terminal 43 is connected to the battery management unit 411. The external terminal 43 is able to connect, for example, to an external power source.

The vehicle ECU 42 cooperatively controls the battery management unit 411 together with other units in response to inputs operated by a driver or the like, thereby performing the management of the whole vehicle. Data concerning the security of the vehicle power source 41, such as a remaining capacity of the vehicle power source 41, are transferred between the battery management unit 411 and the vehicle ECU 42 via communication lines.

The vehicle according to the fourth approach includes the battery pack according to the third approach. Therefore, according to this approach, it is possible to provide the vehicle equipped with the battery pack capable of achieving excellent high temperature durability, high output, and long life.

[Examples]

Examples are explained below, but the approaches are not limited to Examples described below.

(Example 1)

A nonaqueous electrolyte battery according to Example 1 was produced by the following procedure.

<Production of Positive Electrode>

As the positive electrode active material, lithium nickel cobalt manganese composite oxide ($LiNi_{0.34}Co_{0.33}Mn_{0.33}O_2$) having an average particle size of 5 $\mu$m was used. 3 wt% of acetylene black and 3 wt% of graphite were used as a conductive agent. 3 wt% of a polyacrylonitrile copolymer (PAN copolymer) and 1 wt% of a copolymer of acrylonitrile and a phosphate group-containing methacrylate (P-PAN) were used as a binder. Note that the polyacrylonitrile copolymer contained 50 mol% or more of acrylonitrile as a monomer component. N-methyl-2-pyrrolidone (NMP) was added to the positive electrode active material, the conductive agent, and the binder and mixed to prepare a slurry. The slurry was applied to both surfaces of a positive electrode current collector made of a 15-$\mu$m-thick aluminum foil to obtain a laminate. The laminate was preliminarily dried at 80°C for 10 seconds, dried at 130°C for 120 seconds, and pressed to obtain a positive electrode. The positive electrode density was 3.2 g/cc.

<Production of Negative Electrode>

90 wt% of lithium titanate ($Li_4Ti_5O_{12}$) having a spinel structure with an average particle size of 1 $\mu$m was used as a negative electrode active material. 7 wt% of graphite as a conductive agent and 3 wt% of an acrylic binder as a binder were used. These were mixed with NMP to prepare a slurry. The slurry was applied to both surfaces of a negative electrode current collector made of a 15-pm-thick aluminum foil to obtain a laminate. The laminate was dried at 130°C and pressed to obtain a negative electrode. The negative electrode density was 2.25 g/cc.

<Production of Electrode Group>

A cellulose nonwoven fabric having a thickness of 25 $\mu$m was used as a separator. The positive electrode, the separator, the negative electrode, and the separator were laminated in this order to obtain a laminate. Next, the laminate was spirally wound. This was hot-pressed at 80°C to produce a flat electrode group. The electrode group was housed in a pack (container member) made of a laminate film having a three-layer structure of nylon layer/aluminum layer/polyethylene layer and having a thickness of 0.1 mm. This was dried under vacuum at 80°C for 16 hours.

<Preparation of Liquid Nonaqueous Electrolyte>

A nonaqueous electrolytic solution was prepared by dissolving 1 mol/L of $LiPF_6$ as an electrolyte salt in a mixed solvent in which propylene carbonate (PC) and diethyl carbonate (DEC) were mixed at a volume ratio of 1 : 2. After the nonaqueous electrolytic solution was injected into the pack of the laminate film containing the electrode group, the pack was completely sealed by heat sealing. Thus, a nonaqueous electrolyte battery was obtained.

<Measurement of Pore Size Distribution>

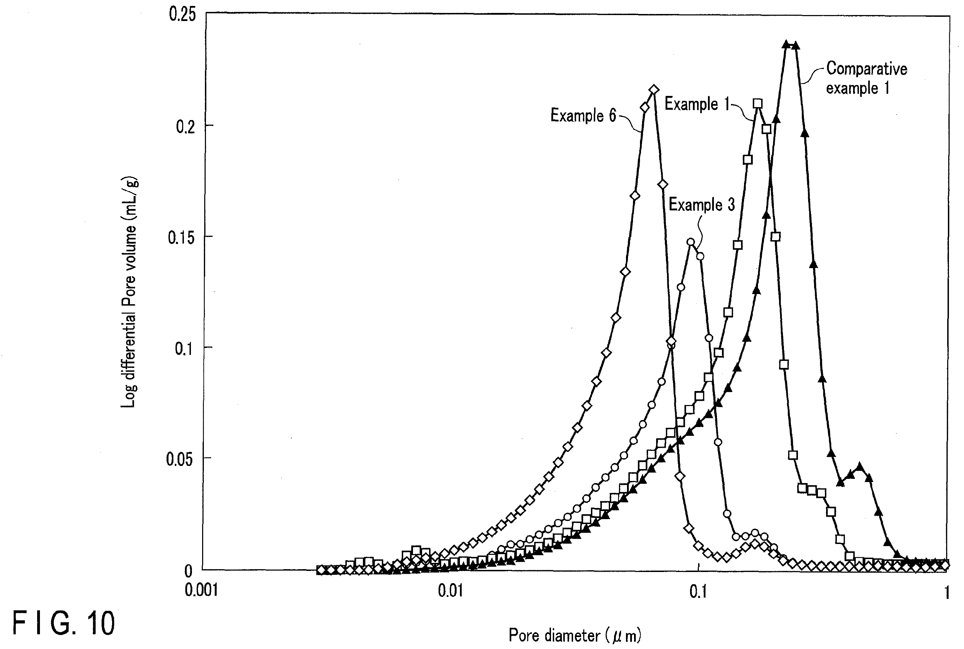

The pore size distribution of the positive electrode was measured according to the method of measuring the pore size distribution by the mercury porosimetry described in the first approach. In addition, the pore specific surface area S and the pore median diameter D of the positive electrode (positive electrode active material-containing layer) were measured. Shimadzu Autopore IV 9520 was used as a device. The obtained pore distribution diagram is shown in FIG. 10. FIG. 10 also shows the results of Example 3, Example 6, and Comparative Example 1 described below. The pore specific surface area S of the positive electrode (positive electrode active material-containing layer) according to Example 1 was 4.9 m$^2$/g and the pore median diameter D was 0.14 $\mu$m. The pore specific surface area S of the positive electrode (positive electrode active material-containing layer) according to Example 3 was 4.24 m$^2$/g and the pore median diameter D was 0.078 um. The pore specific surface area S of the positive electrode (positive electrode active material-containing layer) according to Example 6 was 7.75 m$^2$/g and the pore median diameter D was 0.053 um. The pore specific surface area S of the positive electrode (positive electrode active material-containing layer) according to Comparative Example 1 was 3.57 m$^2$/g and the pore median diameter D was 0.21 um.

<80°C Cycle Life Evaluation>

The cycle that after the produced nonaqueous electrolyte battery was charged to a voltage of 2.7 V at a constant current of 5 A (5 C) in a high temperature environment of 80°C, discharging to 1.8 V at 5 A (5 C), was repeated, and the number of cycles when the capacity reached 80% of the initial capacity was taken as the cycle life (times).

<25°C Output Density Measurement>

After the produced nonaqueous electrolyte battery was charged at a constant current of 1 A (1 C) to a charge depth of 50% in an environment of 25°C, a constant power discharge was performed to 1.5 V, and a maximum power value that can be discharged for 10 seconds was obtained. The output density was calculated by dividing the maximum power value by a nonaqueous electrolyte battery weight.
The above results are summarized in Table 1 below. Table 1 also shows the results of Examples 2 to 12 and Comparative Examples 1 to 7 described below. In addition, Table 2 also shows the results of Examples 13 to 17 and Comparative Examples 8 to 12 and 14 to 17 described below.
Table 3 shows the results of Examples 19 to 22 described below.

(Examples 2 to 4)

A nonaqueous electrolyte battery was prepared in the same manner as described in Example 1, except that a press load was changed so that a positive electrode density became a value shown in Table 1, and then was evaluated.

(Examples 5 to 9)

A nonaqueous electrolyte battery was prepared in the same manner as described in Example 1, except that a material having an average particle size shown in Table 1 was used as a positive electrode active material and a press load was changed so that a positive electrode density became a value shown in Table 1, and then was evaluated.

(Comparative Example 1)

A nonaqueous electrolyte battery was prepared in the same manner as described in Example 1, except that a press load was changed so that a positive electrode density became 3 g/cc, and then was evaluated.

(Comparative Example 2)

At the time of producing the positive electrode, preliminary drying at 80°C was not performed, and only main drying at 130°C was performed. Except for this, a nonaqueous electrolyte battery was prepared in the same manner as described in Example 1 and then evaluated.

(Comparative Examples 3 and 4)

A nonaqueous electrolyte battery was prepared in the same manner as described in Comparative Example 2, except that 4 wt% of polyvinylidene fluoride (PVdF) was used as a positive electrode binder and a press load was changed so that a positive electrode density became a value shown in Table 1, and then was evaluated.

(Example 10)

A nonaqueous electrolyte battery was prepared in the same manner as described in Example 1, except that lithium nickel cobalt manganese composite oxide ($LiNi_{0.5}Co_{0.2}Mn_{0.3}O_2$) having an average particle size of 5 $\mu$m was used as a positive electrode active material and a press load was changed so that a positive electrode density became 3.35 g/cc, and then was evaluated.

(Example 11)

A nonaqueous electrolyte battery was prepared in the same manner as described in Example 1, except that lithium cobalt composite oxide ($LiCoO_2$) having an average particle size of 5 um was used as a positive electrode active material and a press load was changed so that a positive electrode density became 3.35 g/cc, and then was evaluated.

(Example 12)

A nonaqueous electrolyte battery was prepared in the same manner as described in Example 1, except that lithium manganese composite oxide ($LiMn_2O_4$) having an average particle size of 5 $\mu$m was used as a positive electrode active material and a press load was changed so that a positive electrode density became 3 g/cc, and then was evaluated.

(Comparative Example 5)

At the time of producing the positive electrode, preliminary drying at 80°C was not performed, and only main drying at 130°C was performed. Except for this, a nonaqueous electrolyte battery was prepared in the same manner as described in Example 10 and then evaluated.

(Comparative Example 6)

At the time of producing the positive electrode, preliminary drying at 80°C was not performed, and only main drying at 130°C was performed. Except for this, a nonaqueous electrolyte battery was prepared in the same manner as described in Example 11 and then evaluated.

(Comparative Example 7)

At the time of producing the positive electrode, preliminary drying at 80°C was not performed, and only main drying at 130°C was performed. Except for this, a nonaqueous electrolyte battery was prepared in the same manner as described in Example 12 and then evaluated.

(Example 13)

A nonaqueous electrolyte battery was prepared in the same manner as described in Example 1, except that 1.5 wt% of a polyacrylonitrile copolymer and 0.5 wt% of a copolymer of acrylonitrile and a phosphate group-containing methacrylate were used as a positive electrode binder and a press load was changed so that a positive electrode density became 3.2 g/cc, and then was evaluated.

(Example 14)

A nonaqueous electrolyte battery was prepared in the same manner as described in Example 1, except that 7.5 wt% of a polyacrylonitrile copolymer and 2.5 wt% of a copolymer of acrylonitrile and a phosphate group-containing methacrylate were used as a positive electrode binder and a press load was changed so that a positive electrode density became 3.5 g/cc, and then was evaluated.

(Comparative Example 8)

At the time of producing the positive electrode, preliminary drying at 80°C was not performed, and only main drying at 130°C was performed. Except for this, a nonaqueous electrolyte battery was prepared in the same manner as described in Example 13 and then evaluated.

(Comparative Example 9)

At the time of producing the positive electrode, preliminary drying at 80°C was not performed, and only main drying at 130°C was performed. Except for this, a nonaqueous electrolyte battery was prepared in the same manner as described in Example 14 and then evaluated.

(Example 15)

A nonaqueous electrolyte battery was prepared in the same manner as described in Example 1, except that 4 wt% of a polyacrylonitrile copolymer was used as a positive electrode binder and a press load was changed so that a positive electrode density becomes 3.35 g/cc, and then was evaluated.

(Comparative Example 10)

At the time of producing the positive electrode, preliminary drying at 80°C was not performed, and only main drying at 130°C was performed. Except for this, a nonaqueous electrolyte battery was prepared in the same manner as described in Example 15 and then evaluated.

(Example 16)

A nonaqueous electrolyte battery was prepared in the same manner as described in Example 1, except that 4 wt% of a polyacrylonitrile polymer was used as a positive electrode binder and a press load was changed so that a positive electrode density becomes 3.35 g/cc, and then was evaluated.

(Comparative Example 11)

At the time of producing the positive electrode, preliminary drying at 80°C was not performed, and only main drying at 130°C was performed. Except for this, a nonaqueous electrolyte battery was prepared in the same manner as described in Example 16 and then evaluated.

(Example 17)

A nonaqueous electrolyte battery was prepared in the same manner as described in Example 1, except that 2.25 wt% of a polyacrylonitrile copolymer (PAN copolymer), 0.75 wt% of a copolymer of acrylonitrile and phosphate group-containing methacrylate (P-PAN), and 1 wt% of polyvinylidene fluoride (PVdF) were used as a positive electrode binder and a press load was changed so that a positive electrode density became 3.35 g/cc, and then was evaluated. The weight ratio of the PAN copolymer and the P-PAN to the PVdF was 75 : 25.

(Comparative Example 12)

A nonaqueous electrolyte battery was prepared in the same manner as described in Example 1, except that 2.25 wt% of a polyacrylonitrile copolymer (PAN copolymer), 0.75 wt% of a copolymer of acrylonitrile and phosphate group-containing methacrylate (P-PAN), 1 wt% of polyvinylidene fluoride (PVdF) were used as a positive electrode binder, a press load was changed so that a positive electrode density became 3.35 g/cc, and the preliminary drying was not performed, and then was evaluated. The weight ratio of the PAN copolymer and the P-PAN to the PVdF was 75 : 25.

(Comparative Example 14)

At the time of producing the positive electrode, preliminary drying at 80°C was performed before main drying at 130°C was performed. Except for this, a nonaqueous electrolyte battery was prepared in the same manner as described in Comparative Example 3 and then evaluated.

(Comparative Example 15)

A nonaqueous electrolyte battery was prepared in the same manner as described in Example 1, except that 15 wt% of a polyacrylonitrile copolymer (PAN copolymer) and 5 wt% of a copolymer (P-PAN) of acrylonitrile and phosphate group-containing methacrylate were used as a positive electrode binder and a press load was changed so that a positive electrode density became 3.5 g/cc, and then was evaluated.

(Comparative Example 16)

A nonaqueous electrolyte battery was prepared in the same manner as described in Comparative Example 2, except that $LiFePO_4$ having an average particle size of 3 $\mu$m was used as the positive electrode active material and a press load was changed so that a positive electrode density became 2.8 g/cc, and then was evaluated.

(Comparative Example 17)

At the time of producing the positive electrode, preliminary drying at 80°C was performed before main drying at 130°C was performed. Except for this, a nonaqueous electrolyte battery was prepared in the same manner as described in Comparative Example 16 and then evaluated.

(Example 19)

A nonaqueous electrolyte battery was prepared in the same manner as described in Example 1, except that 1.65 wt% of a polyacrylonitrile copolymer (PAN copolymer), 0.55 wt% of a copolymer of acrylonitrile and phosphate group-containing methacrylate (P-PAN), and 1.8 wt% of polyvinylidene fluoride (PVdF) were used as a positive electrode binder, and then was evaluated. The weight ratio of the PAN copolymer and the P-PAN to the PVdF was 55 : 45.

(Example 20)

A nonaqueous electrolyte battery was prepared in the same manner as described in Example 1, except that 2.4 wt% of a polyacrylonitrile copolymer (PAN copolymer), 1.8 wt% of a copolymer of acrylonitrile and phosphate group-containing methacrylate (P-PAN), and 1.6 wt% of polyvinylidene fluoride (PVdF) were used as a positive electrode binder, and then was evaluated. The weight ratio of the PAN copolymer and the P-PAN to the PVdF was 60 : 40.

(Example 21)

A nonaqueous electrolyte battery was prepared in the same manner as described in Example 1, except that 2.6 wt% of a polyacrylonitrile copolymer (PAN copolymer), 1.95 wt% of a copolymer of acrylonitrile and phosphate group-containing methacrylate (P-PAN), and 0.65 wt% of polyvinylidene fluoride (PVdF) were used as a positive electrode binder, and then was evaluated. The weight ratio of the PAN copolymer and the P-PAN to the PVdF was 65 : 35.

(Example 22)

A nonaqueous electrolyte battery was prepared in the same manner as described in Example 1, except that 2.8 wt% of a polyacrylonitrile copolymer (PAN copolymer), 2.1 wt% of a copolymer of acrylonitrile and phosphate group-containing methacrylate (P-PAN), and 0.7 wt% of polyvinylidene fluoride (PVdF) were used as a positive electrode binder, and then was evaluated. The weight ratio of the PAN copolymer and the P-PAN to the PVdF was 70 : 30.

[Table 1]

| | Positive electrode active material | Average particle size of positive electrode active material ($\mu$m) | Positive electrode binder (Weight Ratio) | Amount of conductive agent in positive electrode (wt.%) | Amount of binder in positive electrode (wt.%) | Presence or absence of preliminary drying |
|---|---|---|---|---|---|---|
| Example 1 | $LiNi_{0.34}Co_{0.33}Mn_{0.33}O_2$ | 5 | PAN copolymer + P-PAN | 6 | 4 | Present |
| Example 2 | $LiNi_{0.34}Co_{0.33}Mn_{0.33}O_2$ | 5 | PAN copolymer + P-PAN | 6 | 4 | Present |
| Example 3 | $LiNi_{0.34}Co_{0.33}Mn_{0.33}O_2$ | 5 | PAN copolymer + P-PAN | 6 | 4 | Present |
| Example 4 | $LiNi_{0.34}CO_{0.33}Mn_{0.33}O_2$ | 5 | PAN copolymer + P-PAN | 6 | 4 | Present |
| Example 5 | $LiNi_{0.34}Co_{0.33}Mn_{0.33}O_2$ | 8 | PAN copolymer + P-PAN | 6 | 4 | Present |
| Example 6 | $LiNi_{0.34}Co_{0.33}Mn_{0.33}O_2$ | 8 | PAN copolymer + P-PAN | 6 | 4 | Present |
| Example 7 | $LiNi_{0.34}Co_{0.33}Mn_{0.33}O_2$ | 3 | PAN copolymer + P-PAN | 6 | 4 | Present |
| Example 8 | $LiNi_{0.34}CO_{0.33}Mn_{0.33}O_2$ | 10 | PAN copolymer + P-PAN | 6 | 4 | Present |
| Example 9 | $LiNi_{0.34}CO_{0.33}Mn_{0.33}O_2$ | 12 | PAN copolymer + P-PAN | 6 | 4 | Present |
| Comparative Example 1 | $LiNi_{0.34}Co_{0.33}Mn_{0.33}O_2$ | 5 | PAN copolymer + P-PAN | 6 | 4 | Present |
| Comparative Example 2 | $LiNi_{0.34}Co_{0.33}Mn_{0.33}O_2$ | 5 | PAN copolymer + P-PAN | 6 | 4 | Absent |
| Comparative Example 3 | $LiNi_{0.34}Co_{0.33}Mn_{0.33}O_2$ | 5 | PVdF | 6 | 4 | Absent |
| Comparative Example 4 | $LiNi_{0.34}CO_{0.33}Mn_{0.33}O_2$ | 5 | PVdF | 6 | 4 | Absent |
| | | | | | | |
| Example 10 | $LiNi_{0.5}Co_{0.2}Mn_{0.3}O_2$ | 5 | PAN copolymer + P-PAN | 6 | 4 | Present |

(continued)

| | Positive electrode active material | Average particle size of positive electrode active material (μm) | Positive electrode binder (Weight Ratio) | Amount of conductive agent in positive electrode (wt.%) | Amount of binder in positive electrode (wt.%) | Presence or absence of preliminary drying |
|---|---|---|---|---|---|---|
| Example 11 | $LiCoO_2$ | 5 | PAN copolymer + P-PAN | 6 | 4 | Present |
| Example 12 | $LiMn_2O_4$ | 5 | PAN copolymer + P-PAN | 6 | 4 | Present |
| Comparative Example 5 | $LiNi_{0.5}Co_{0.2}Mn_{0.3}O_2$ | 5 | PAN copolymer + P-PAN | 6 | 4 | Absent |
| Comparative Example 6 | $LiCoO_2$ | 5 | PAN copolymer + P-PAN | 6 | 4 | Absent |
| Comparative Example 7 | $LiMn_2O_4$ | 5 | PAN copolymer + P-PAN | 6 | 4 | Absent |
| | Positive electrode density (g/cc) | Pore specific surface area S ($m^2/g$) | Pore median diameter D (μm) | S/D | 80°C cycle life (times) | 25°C output density (W/kg) |
| Example 1 | 3.2 | 4.9 | 0.14 | 35.0 | 3500 | 3500 |
| Example 2 | 3.35 | 4.07 | 0.11 | 37.0 | 4000 | 3700 |
| Example 3 | 3.5 | 4.24 | 0.078 | 54.4 | 4200 | 4000 |
| Example 4 | 3.6 | 4.18 | 0.044 | 95.0 | 4000 | 3500 |
| Example 5 | 3.35 | 7.64 | 0.063 | 121.3 | 4300 | 4200 |
| Example 6 | 3.5 | 7.75 | 0.053 | 146.2 | 4000 | 4200 |
| Example 7 | 3.35 | 3.5 | 0.078 | 44.9 | 3500 | 3800 |
| Example 8 | 3.35 | 14.5 | 0.071 | 204.2 | 3800 | 4000 |
| Example 9 | 3.35 | 16.1 | 0.069 | 233.3 | 3200 | 4000 |
| Comparative Example 1 | 3 | 3.57 | 0.21 | 17.0 | 2100 | 2900 |
| Comparative Example 2 | 3.35 | 2.59 | 0.077 | 33.6 | 2800 | 2900 |
| Comparative Example 3 | 3.35 | 4.34 | 0.11 | 39.5 | 2500 | 4000 |
| Comparative Example 4 | 3.5 | 4.63 | 0.082 | 56.5 | 2300 | 3100 |
| | | | | | | |
| Example 10 | 3.35 | 4.21 | 0.12 | 35.1 | 3900 | 3400 |
| Example 11 | 3.35 | 3.86 | 0.11 | 35.3 | 3800 | 3600 |

(continued)

| | Positive electrode density (g/cc) | Pore specific surface area S ($m^2$/g) | Pore median diameter D ($\mu$m) | S/D | 80°C cycle life (times) | 25°C output density (W/kg) |
|---|---|---|---|---|---|---|
| Example 12 | 3 | 4.55 | 0.13 | 35.0 | 3100 | 3800 |
| Comparative Example 5 | 3.35 | 2.5 | 0.078 | 32.0 | 2700 | 2700 |
| Comparative Example 6 | 3.35 | 2.52 | 0.08 | 31.5 | 2700 | 2800 |
| Comparative Example 7 | 3 | 2.56 | 0.077 | 33.2 | 1900 | 3000 |

[Table 2]

| | Positive electrode active material | Average particle size of positive electrode active material ($\mu$m) | Positive electrode binder (Weight Ratio) | Amount of conductive agent in positive electrode (wt.%) | Amount of binder in positive electrode (wt.%) | Presence or absence of preliminary drying |
|---|---|---|---|---|---|---|
| Example 13 | $LiNi_{0.34}Co_{0.33}Mn_{0.33}O_2$ | 5 | PAN copolymer + P-PAN | 6 | 2 | Present |
| Example 14 | $LiNi_{0.34}Co_{0.33}Mn_{0.33}O_2$ | 5 | PAN copolymer + P-PAN | 6 | 10 | Present |
| Comparative Example 8 | $LiNi_{0.34}Co_{0.33}Mn_{0.33}O_2$ | 5 | PAN copolymer + P-PAN | 6 | 2 | Absent |
| Comparative Example 9 | $LiNi_{0.34}Co_{0.33}Mn_{0.33}O_2$ | 5 | PAN copolymer + P-PAN | 6 | 10 | Absent |
| | | | | | | |
| Example 15 | $LiNi_{0.34}Co_{0.33}Mn_{0.33}O_2$ | 5 | PAN copolymer | 6 | 4 | Present |
| Comparative Example 10 | $LiNi_{0.34}Co_{0.33}Mn_{0.33}O_2$ | 5 | PAN copolymer | 6 | 4 | Absent |
| | | | | | | |
| Example 16 | $LiNi_{0.34}Co_{0.33}Mn_{0.33}O_2$ | 5 | PAN | 6 | 4 | Present |
| Comparative Example 11 | $LiNi_{0.34}Co_{0.33}Mn_{0.33}O_2$ | 5 | PAN | 6 | 4 | Absent |
| | | | | | | |
| Example 17 | $LiNi_{0.34}Co_{0.33}Mn_{0.33}O_2$ | 5 | (PAN copolymer + P-PAN): PVdF = 75 : 25 | 6 | 4 | Present |

(continued)

| | Positive electrode active material | Average particle size of positive electrode active material (μm) | Positive electrode binder (Weight Ratio) | Amount of conductive agent in positive electrode (wt.%) | Amount of binder in positive electrode (wt.%) | Presence or absence of preliminary drying |
|---|---|---|---|---|---|---|
| Comparative Example 12 | $LiNi_{0.34}Co_{0.33}Mn_{0.33}O_2$ | 5 | (PAN copolymer + P-PAN): PVdF = 75 : 25 | 6 | 4 | Absent |
| | | | | | | |
| Comparative Example 14 | $LiNi_{0.34}Co_{0.33}Mn_{0.33}O_2$ | 5 | PVdF | 6 | 4 | Present |
| Comparative Example 15 | $LiNi_{0.34}Co_{0.33}Mn_{0.33}O_2$ | 5 | PAN copolymer + P-PAN | 6 | 20 | Present |
| Comparative Example 16 | $LiFePO_4$ | 3 | PAN copolymer + P-PAN | 6 | 4 | Absent |
| Comparative Example 17 | $LiFePO_4$ | 3 | PAN copolymer + P-PAN | 6 | 4 | Present |
| | Positive electrode density (g/cc) | Pore specific surface area S ($m^2$/g) | Pore median diameter D (μm) | SID | 80°C cycle life (times) | 25°C output density (W/kg) |
| Example 13 | 3.2 | 5.2 | 0.14 | 37.2 | 3500 | 4000 |
| Example 14 | 3.5 | 3.52 | 0.1 | 35.0 | 4300 | 3200 |
| Comparative Example 8 | 3.2 | 3.29 | 0.098 | 33.6 | 1900 | 3100 |
| Comparative Example 9 | 3.5 | 2.28 | 0.081 | 28.1 | 2900 | 2600 |
| | | | | | | |
| Example 15 | 3.35 | 3.52 | 0.1 | 35.2 | 3500 | 3700 |
| Comparative Example 10 | 3.35 | 2.29 | 0.075 | 30.5 | 2100 | 2900 |
| | | | | | | |
| Example 16 | 3.35 | 4.63 | 0.13 | 35.6 | 3400 | 3600 |
| Comparative Example 11 | 3.35 | 2.26 | 0.077 | 29.3 | 2100 | 2900 |
| | | | | | | |
| Example 17 | 3.35 | 4.04 | 0.11 | 36.7 | 3400 | 3800 |
| Comparative Example 12 | 3.35 | 3.15 | 0.1 | 31.5 | 2600 | 3000 |
| | | | | | | |

(continued)

| | Positive electrode density (g/cc) | Pore specific surface area S ($m^2$/g) | Pore median diameter D ($\mu$m) | SID | 80°C cycle life (times) | 25°C output density (W/kg) |
|---|---|---|---|---|---|---|
| Comparative Example 14 | 3.35 | 4.02 | 0.11 | 36.5 | 2400 | 3900 |
| Comparative Example 15 | 3.5 | 2.15 | 0.065 | 33.1 | 3900 | 1600 |
| Comparative Example 16 | 2.8 | 3.01 | 0.1 | 30.1 | 2900 | 2500 |
| Comparative Example 17 | 2.8 | 3.5 | 0.098 | 35.6 | 3500 | 2600 |

[Table 3]

| | Positive electrode active material | Average particle size of positive electrode active material ($\mu$m) | Positive electrode binder (Weight Ratio) | Amount of conductive agent in positive electrode (wt.%) | Amount of binder in positive electrode (wt.%) | Presence or absence of preliminary drying |
|---|---|---|---|---|---|---|
| Example 19 | $LiNi_{0.34}Co_{0.33}Mn_{0.33}O_2$ | 5 | (PAN copolymer + P-PAN): PVdF = 55 : 45 | 6 | 4 | Present |
| Example 20 | $LiNi_{0.34}Co_{0.33}Mn_{0.33}O_2$ | 5 | (PAN copolymer + P-PAN): PVdF = 60: 40 | 6 | 4 | Present |
| Example 21 | $LiNi_{0.34}Co_{0.33}Mn_{0.33}O_2$ | 5 | (PAN copolymer + P-PAN): PVdF = 65 : 35 | 6 | 4 | Present |
| Example 22 | $LiNi_{0.34}Co_{0.33}Mn_{0.33}O_2$ | 5 | (PAN copolymer + P-PAN) : PVdF = 70 : 30 | 6 | 4 | Present |
| | Positive electrode density (g/cc) | Pore specific surface area S ($m^2$/g) | Pore median diameter D ($\mu$m) | SID | 80°C cycle life (times) | 25°C output density (W/kg) |
| Example 19 | 3.35 | 4.04 | 0.11 | 36.7 | 2800 | 3900 |
| Example 20 | 3.35 | 4.03 | 0.11 | 36.6 | 3300 | 3900 |

(continued)

|  | Positive electrode density (g/cc) | Pore specific surface area S (m²/g) | Pore median diameter D (μm) | SID | 80°C cycle life (times) | 25°C output density (W/kg) |
|---|---|---|---|---|---|---|
| Example 21 | 3.35 | 4.04 | 0.11 | 36.7 | 3300 | 3800 |
| Example 22 | 3.35 | 4.05 | 0.11 | 36.8 | 3400 | 3800 |

From comparison between Examples and Comparative Examples, the positive electrode includes the active material represented by the general formula $Li_xM_yO_2$, where $0 \leq x \leq 1.33$ and $0.5 \leq y \leq 1$ are satisfied and M contains at least one element selected from Ni, Co, and Mn, and the binder including the polymer that contains the polymer containing the nitrogen atom, wherein in the pore size distribution obtained by mercury porosimetry, when the pore median diameter is represented by D [μm] and the pore specific surface area is represented by S [m²/g], the secondary battery including the positive electrode satisfying $S/D \geq 35$ has high temperature durability and are excellent in output characteristics and life characteristics.

For example, Examples 3 and 5 in which S/D is 50 or more are excellent in cycle life at 80°C and output density at 25°C, as compared with Examples 1 and 2 in which S/D is 35 or more to less than 50. Comparative Examples 1 and 2 in which S/D is less than 35 are inferior in 80°C cycle life and 25°C output density, as compared with Examples 1 to 9.

For example, Examples 3 and 5 in which the pore median diameter D is within a range of 0.05 um to 0.2 μm are superior in 80°C cycle life and 25°C output density, as compared with Example 4 in which the pore median diameter D is outside this range.

For example, in Example 8 in which the pore specific surface area S is within a range of 3.5 m²/g to 15 m²/g, 80°C cycle life is excellent, as compared with Example 9 in which the pore specific surface area S is outside this range.

As is apparent from Examples 10 to 12 and Comparative Examples 5 to 7, even if the type of the positive electrode active material is changed, high temperature durability and excellent output characteristics and life characteristics are provided if $S/D \geq 35$ is satisfied.

As is apparent from Examples 13 and 14 and Comparative Examples 8 and 9, even if the amount of the binder in the active material-containing layer is increased or decreased, high temperature durability and excellent output characteristics and life characteristics are provided if $S/D \geq 35$ is satisfied.

As shown in Examples 15 and 16, even when the binder does not contain the copolymer containing methacrylate having the phosphoric acid group, high temperature durability and excellent output characteristics and life characteristics are provided.

As shown in Examples 17 and 19 to 22, even when the binder contains not only a polymer containing a monomer containing a nitrogen atom but also a binder such as PVdF, high temperature durability and excellent output characteristics and life characteristics are provided if $S/D \geq 35$ is satisfied.

Of Examples 17 and 19-22, Examples 17 and 20-22 satisfy the condition $S/D \geq 35$ and the condition that the ratio of the weight of the aforementioned polymer to the weight of the binder is 60 wt% or more. It is ascertained that Examples 17 and 20-22 are particularly excellent in high temperature durability (80°C cycle life). These examples show that an electrode containing a less amount of the binder which is liable to swell with respect to the electrolyte, such as PVdF, tends to be excellent in high temperature durability.

As shown in Comparative Examples 16 and 17, when lithium phosphorus oxide having an olivine structure is used as the positive electrode active material, improvement of battery performance by satisfying $S/D \geq 35$ is not remarkable.

The electrodes according to at least one approach and Examples described above includes the binder and the active material represented by the general formula $Li_xM_yO_2$, where $0 \leq x \leq 1.33$ and $0.5 \leq y \leq 1$ are satisfied and M contains at least one element selected from the group consisting of Ni, Co, and Mn. The binder includes a polymer that contains a monomer containing a nitrogen atom. In the pore size distribution of the electrode according to mercury porosimetry, the following formula (1) is satisfied when a pore median diameter is represented by D [um] and a pore specific surface area is represented by S [m²/g] :

$$S/D \geq 35 \ ... \ (1).$$

Therefore, it is possible to provide an electrode having high output and excellent high temperature durability.

While certain approaches have been described, these approaches have been presented by way of example only, and are not intended to limit the scope of the claims. Indeed, the electrodes described herein may be embodied in a variety of other forms; furthermore, various omissions, substitutions and changes in the form of the electrodes described herein may be made.

**Claims**

1. An electrode comprising a binder, and an active material represented by a general formula $Li_xM_yO_2$, where $0 \leq x \leq 1.33$ and $0.5 \leq y \leq 1$ are satisfied and M comprises at least one element selected from the group consisting of Ni, Co, and Mn,

   wherein the binder comprises a polymer that comprises a monomer comprising a nitrogen atom,
   the monomer comprises at least one of acrylonitrile and imide compounds, and
   in a pore size distribution of the electrode according to mercury porosimetry, a following formula (1) is satisfied when a pore median diameter is represented by D [um] and a pore specific surface area is represented by S [m$^2$/g]:

$$S/D \geq 35 \ ... \ (1).$$

2. The electrode according to claim 1, wherein a ratio in weight of the polymer to the binder is 60 wt% or more.

3. The electrode according to claim 1 or 2, wherein a following formula (2) is satisfied:

$$S/D \geq 50 \ ... \ (2).$$

4. The electrode according to any one of claims 1 to 3, wherein the pore median diameter D is within a range of 0.05 um to 0.2 um and the pore specific surface area S is within a range of 3.5 m$^2$/g to 15 m$^2$/g.

5. The electrode according to any one of claims 1 to 4, wherein the polymer is a polyacrylonitrile copolymer.

6. The electrode according to any one of claims 1 to 5, wherein the binder further comprises a copolymer comprising methacrylate having a phosphoric acid group.

7. The electrode according to any one of claims 1 to 6, wherein the pore median diameter D and the pore specific surface area S are values measured for pore diameters existing within a range of 0.003 um to 0.5 um according to the pore size distribution.

8. A secondary battery (100) comprising a positive electrode (5), a negative electrode (3), and an electrolyte, wherein the positive electrode (5) is the electrode according to any one of claims 1 to 7.

9. A battery pack (300) comprising the secondary battery (100) according to claim 8.

10. The battery pack (300) according to claim 9, further comprising an external power distribution terminal (347) and a protective circuit (344).

11. The battery pack (300) according to claim 9 or 10, further comprising plural of the secondary battery (100), wherein the plural of the secondary battery (100) are electrically connected in series, in parallel, or in combination of in series and in parallel.

12. A vehicle (400) comprising the battery pack (300) according to any one of claims 9 to 11.

13. The vehicle (400) according to claim 12, which comprises a mechanism configured to convert kinetic energy of the vehicle (400) into regenerative energy.

**Patentansprüche**

1. Elektrode, umfassend ein Bindemittel und ein aktives Material, dargestellt durch die allgemeine Formel $Li_xM_yO_2$, wobei $0 \leq x \leq 1,33$ und $0,5 \leq y \leq 1$ erfüllt sind und M mindestens ein Element, ausgewählt aus der Gruppe, bestehend aus Ni, Co und Mn, umfasst,

   wobei das Bindemittel ein Polymer umfasst, das ein Monomer umfasst, das ein Stickstoffatom enthält, das Monomer mindestens eine der Verbindungen von Acrylnitril und Imid umfasst, und in einer Porengrößenverteilung der Elektrode gemäß der Quecksilberporosimetrie die folgende Formel (1) erfüllt ist, wenn ein mittlerer Porendurchmesser durch D [um] und eine spezifische Porenoberfläche durch S [m²/g] dargestellt wird:

   $$S/D \geq 35 \ ... \ (1).$$

2. Elektrode nach Anspruch 1, wobei das Gewichtsverhältnis des Polymers zum Bindemittel 60 Gew.-% oder mehr beträgt.

3. Elektrode nach Anspruch 1 oder 2, wobei eine folgende Formel (2) erfüllt ist:

   $$S/D \geq 50 \ ... \ (2).$$

4. Elektrode nach einem der Ansprüche 1 bis 3, wobei der mittlere Porendurchmesser D in einem Bereich von 0,05 um bis 0,2 um liegt und die spezifische Porenoberfläche S in einem Bereich von 3,5 m²/g bis 15 m²/g liegt.

5. Elektrode nach einem der Ansprüche 1 bis 4, wobei das Polymer ein Polyacrylnitril-Copolymer ist.

6. Elektrode nach einem der Ansprüche 1 bis 5, wobei das Bindemittel ferner ein Copolymer umfasst, das Methacrylat mit einer Phosphorsäuregruppe umfasst.

7. Elektrode nach einem der Ansprüche 1 bis 6, wobei der mittlere Porendurchmesser D und die spezifische Porenoberfläche S Werte sind, die für Porendurchmesser innerhalb eines Bereichs von 0,003 um bis 0,5 um gemäß der Porengrößenverteilung gemessen wurden.

8. Sekundärbatterie (100) mit einer positiven Elektrode (5), einer negativen Elektrode (3) und einem Elektrolyten, wobei die positive Elektrode (5) die Elektrode nach einem der Ansprüche 1 bis 7 ist.

9. Batteriepack (300) mit der Sekundärbatterie (100) nach Anspruch 8.

10. Batteriepack (300) nach Anspruch 9, ferner mit einem Extern-Stromverteilungsanschluss (347) und einer Schutzschaltung (344).

11. Batteriepack (300) nach Anspruch 9 oder 10, der ferner mehrere Sekundärbatterien (100) umfasst, wobei die mehreren Sekundärbatterien (100) elektrisch in Reihe, parallel oder in einer Kombination aus Reihe und parallel geschaltet sind.

12. Fahrzeug (400) mit dem Batteriepack (300) nach einem der Ansprüche 9 bis 11.

13. Fahrzeug (400) nach Anspruch 12, das einen Mechanismus umfasst, der so konfiguriert ist, dass er kinetische Energie des Fahrzeugs (400) in regenerative Energie umwandelt.

**Revendications**

1. Électrode comprenant un liant, et une matière active représentée par une formule générale $Li_xM_yO_2$, où $0 \leq x \leq 1,33$ et $0,5 \leq y \leq 1$ sont satisfaites et M comprend au moins un élément sélectionné dans le groupe consistant en Ni, Co, et Mn,

dans laquelle le liant comprend un polymère qui comprend un monomère comprenant un atome d'azote, le monomère comprend au moins un de composés acrylonitrile et imide, et
dans une distribution de la taille des pores de l'électrode selon une porosimétrie au mercure, une formule (1) suivante est satisfaite lorsqu'un diamètre médian de pore est représenté par D [μm] et une surface spécifique de pore est représentée par S [m²/g] :

$$S/D \geq 35 \dots (1).$$

2. Électrode selon la revendication 1, dans laquelle un rapport en poids entre le polymère et le liant est de 60 % en poids ou plus.

3. Électrode selon la revendication 1 ou 2, dans laquelle une formule (2) suivante est satisfaite :

$$S/D \geq 50 \dots (2).$$

4. Électrode selon l'une quelconque des revendications 1 à 3, dans laquelle le diamètre médian de pore D est dans une plage de 0,05 μm à 0,2 μm et la surface spécifique de pore S est dans une plage de 3,5 m²/g à 15 m²/g.

5. Électrode selon l'une quelconque des revendications 1 à 4, dans laquelle le polymère est un copolymère de polyacrylonitrile.

6. Électrode selon l'une quelconque des revendications 1 à 5, dans laquelle le liant comprend en outre un copolymère comprenant du méthacrylate présentant un groupe acide phosphorique.

7. Électrode selon l'une quelconque des revendications 1 à 6, dans laquelle le diamètre médian de pore D et la surface spécifique de pore S sont des valeurs mesurées pour des diamètres de pore existant dans une plage de 0,003 μm à 0,5 μm selon la distribution de la taille des pores.

8. Batterie secondaire (100) comprenant une électrode positive (5), une électrode négative (3), et un électrolyte, dans laquelle l'électrode positive (5) est l'électrode selon l'une quelconque des revendications 1 à 7.

9. Bloc-batterie (300) comprenant la batterie secondaire (100) selon la revendication 8.

10. Bloc-batterie (300) selon la revendication 9, comprenant en outre une borne de distribution de puissance externe (347) et un circuit de protection (344).

11. Bloc-batterie (300) selon la revendication 9 ou 10, comprenant en outre une pluralité de batteries secondaires (100), dans lequel la pluralité de batteries secondaires (100) sont connectées électriquement en série, en parallèle, ou en une combinaison de connexion en série et de connexion en parallèle.

12. Véhicule (400) comprenant le bloc-batterie (300) selon l'une quelconque des revendications 9 à 11.

13. Véhicule (400) selon la revendication 12, qui comprend un mécanisme configuré pour convertir l'énergie cinétique du véhicule (400) en énergie régénératrice.

FIG. 1

FIG. 2

FIG. 3

FIG. 4

FIG. 5

F I G. 6

F I G. 7

F I G. 8

F I G. 9

EP 3 540 827 B1

FIG. 10

**REFERENCES CITED IN THE DESCRIPTION**

**Patent documents cited in the description**

- JP 2011054463 A